# EUROPÄISCHE PATENTSCHRIFT

(11) **EP 2 788 231 B1**
(45) Veröffentlichungstag und Bekanntmachung des Hinweises auf die Patenterteilung: **06.04.2016**
(21) Anmeldenummer: 12790907.5
(22) Anmeldetag: 26.11.2012
(51) Int. Cl.: B60T 1/087, B60T 10/02, F16D 57/04

(54) **ABKOPPELBARER HYDRODYNAMISCHER RETARDER UND STEUERUNGSVERFAHREN HIERFÜR**
UNCOUPLABLE HYDRODYNAMIC RETARDER AND RELATED CONTROL METHOD
RALENTISSEUR HYDRODYNAMIQUE DÉSACCOUPLABLE ET PROCÉDÉ DE COMMANDE ASSOCIÉ

(30) Priorität: 09.12.2011 DE 102011120626
(43) Veröffentlichungstag der Anmeldung: 15.10.2014
(73) Patentinhaber: Voith Patent GmbH, 89522 Heidenheim (DE)
(72) Erfinder: DENK, Alexander, 89415 Lauingen (DE); WENG, Otto, 73485 Unterschneidheim (DE); BECKE, Martin, 89075 Ulm (DE)
(74) Vertreter: Dr. Weitzel & Partner
(86) Internationale Anmeldenummer: PCT/EP2012/073566
(87) Internationale Veröffentlichungsnummer: WO 2013/083422

(56) Entgegenhaltungen:
- EP-A1- 0 937 619
- DE-A1- 10 255 054
- DE-A1-102009 001 146
- US-A- 5 357 444

## Beschreibung

Die vorliegende Erfindung betrifft einen hydrodynamischen Retarder, der mittels einer Trennkupplung von seinem Antrieb abkoppelbar ist, sowie ein Verfahren zum Steuern des Ein- und Ausschaltens eines solchen hydrodynamischen Retarders.

Hydrodynamische Retarder werden seit vielen Jahren als verschleißfreie Dauerbremsen in Kraftfahrzeugen sowohl auf der Schiene als auch auf der Straße, letzteres insbesondere in Lastkraftwagen, eingesetzt. Obwohl solche verschleißfreien Dauerbremsen bezüglich der Sicherheit beim Bremsen des Fahrzeugs und bezüglich eines geringeren Verschleißes der reibend arbeitenden Betriebsbremsen unbestritten erhebliche Vorteile mit sich bringen, sind die Leerlaufverluste im Nichtbremsbetrieb des hydrodynamischen Retarders ein Kritikpunkt. So konnten diese Leerlaufverluste zwar durch Vorsehen von sogenannten Ventilationsblenden oder durch Vorsehen eines im Nichtbremsbetrieb vom Stator (Sekundärrad) abfahrenden Rotors (Primärrad) reduziert werden. Die genannten Maßnahmen reichen dabei jedoch in der Regel nicht aus, um die Leerlaufverluste auf nahezu Null abzusenken.

Eine Möglichkeit, die Leerlaufverluste eines solchen hydrodynamischen Retarders auf Null abzusenken, besteht darin, den hydrodynamischen Retarder mittels einer Trennkupplung vom Antriebsstrang abkoppelbar zu gestalten. Hierbei ergeben sich jedoch die folgenden Nachteile: Zum einen addiert sich die Zeit zum Schließen der Trennkupplung auf die Zeit zum Befüllen des hydrodynamischen Retarders auf, was die Ansprechzeit zwischen der Aktivierungsanforderung für den hydrodynamischen Retarder und dem Zurverfügungstellen des geforderten Bremsmomentes durch den hydrodynamischen Retarder verlängert. Zum anderen kann die Trennkupplung, die insbesondere als Reibkupplung ausgebildet ist, durch die hohen Belastungen, insbesondere beim Einschalten des hydrodynamischen Retarders, zu einem frühzeitigeren Servicebedarf oder Austausch von Komponenten im Vergleich zu Antriebssträngen mit hydrodynamischen Retardern, die ohne Trennkupplung am Antriebsstrang angebunden sind, führen.

Die europäische Patentschrift EP 2 024 209 B1 schlägt zur Verkürzung der Ansprechzeit eines über eine Trennkupplung am Antriebsstrang angeschlossenen hydrodynamischen Retarders vor, die Trennkupplung immer dann, wenn kein Traktionsbetrieb des Kraftfahrzeugs vorliegt, präventiv zu schließen und den Retarder im entleerten Zustand anzukoppeln.

Die Offenlegungsschrift DE 199 27 397 A1 schlägt eine selbstverstärkende Reibkupplung zum Ankoppeln des hydrodynamischen Retarders vor, die ein Ankoppeln des hydrodynamischen Retarders auch im befüllten Zustand ermöglicht.

Die Offenlegungsschrift DE 10 2005 052 121 A1 schlägt ein Ausschalten eines hydrodynamischen Retarders durch Entleeren seines Arbeitsraumes und gleichzeitiges Loslassen des Stators, sodass dieser mit dem Rotor trudeln kann, vor.

Die Offenlegungsschrift DE 10 2009 001 146 A1 schlägt eine koaxiale Anordnung des Rotors des Retarders und des Rotors einer elektrischen Maschine vor, die gemeinsam über eine Trennkupplung, insbesondere unsynchronisierte Trennkupplung, vom Antriebsstrang abschaltbar sind.

Der vorliegenden Erfindung liegt die Aufgabe zugrunde, einen Kraftfahrzeugantriebsstrang mit einem mittels einer Trennkupplung mechanisch vom Antriebsstrang abkoppelbaren hydrodynamischen Retarder sowie ein Steuerungsverfahren hierfür anzugeben, mit welchen die oben dargestellten Nachteile reduziert oder vermieden werden können. Die erfindungsgemäße Lösung soll sich durch eine einfache konstruktive und kostengünstige Bereitstellung auszeichnen.

Die erfindungsgemäße Aufgabe wird durch einen hydrodynamischen Retarder mit den Merkmalen von Anspruch 13 sowie ein Verfahren zum Steuern des Ein- und Ausschaltens des hydrodynamischen Retarders mit den Merkmalen der jeweiligen Ansprüche 1 bis 6 gelöst.

Gemäß einer ersten Ausführungsform der Erfindung umfasst ein Verfahren zum Steuern eines in einem Antriebsstrang eines Kraftfahrzeugs angeordneten hydrodynamischen Retarders, wobei das Kraftfahrzeug einen Antriebsmotor umfasst, dessen Leistungsabgabe über ein Fußpedal, einen Hebel oder einen anderen Aktuator regelbar ist, wobei ein Rotor des hydrodynamischen Retarders über eine Trennkupplung in eine Triebverbindung mit dem Antriebsmotor und/oder dem Kraftfahrzeugantriebsstrang schaltbar ist und der hydrodynamische Retarder in einem Bremsbetrieb mit einem Arbeitsmedium befüllbar ist, um Bremsleistung auf den Kraftfahrzeugantriebsstrang und/oder den Antriebsmotor auszuüben und in einem Nicht-Bremsbetrieb vollständig oder bis auf eine Restmenge von Arbeitsmedium entleert ist und im Wesentlichen keine Bremsleistung liefert, und die eingestellte Bremsleistung wenigstens mittelbar über einen Bremsaktuator oder eine Steuervorrichtung steuerbar oder regelbar ist, die folgenden Schritte: Beim Schalten des hydrodynamischen Retarders vom Bremsbetrieb mittels des Bremsaktuators oder der Steuervorrichtung in den Nicht-Bremsbetrieb erfolgt das Öffnen der Trennkupplung mit variierender zeitlicher Verzögerung in Abhängigkeit wenigstens einer der nachfolgenden Größen:
- der Schaltzustand einer dem Antriebsmotor zugeordneten Motorbremse, mittels der Bremsleistung auf den Kraftfahrzeugantriebsstrang ausübbar ist;
- die Stellung des Fußpedals, des Hebels oder eines anderen Aktuators zur Regelung der Leistungsabgabe des Antriebsmotors;
- die Gangstellung eines im Kraftfahrzeugantriebsstrang angeordneten Getriebes;
- der Gradient der Drehzahl oder des Drehmoments des Antriebsmotors, einer An- oder Abtriebswelle des Getriebes oder von Antriebsrädern des Kraftfahrzeugs;
- die aktuelle Geschwindigkeit oder Beschleunigung des Kraftfahrzeugs;
- das Vorliegen eines Getriebeschaltbefehls, mit welchem ein Gangwechsel in einem Schaltgetriebe des Kraftfahrzeugs angefordert wird.

Bevorzugt erfolgt das Öffnen der Trennkupplung beim Schalten des hydrodynamischen Retarders vom Bremsbetrieb in den Nicht-Bremsbetrieb mit variierender zeitlicher Verzögerung in Abhängigkeit wenigstens einer der nachfolgenden Bedingungen:
- die aktuelle Stellung des Fußpedals, des Hebels oder eines anderen Aktuators zur Regelung der Leistungsabgabe des Antriebsmotors liegt unterhalb einer vorbestimmten Stellung;
- es ist/wird aktuell ein Gang unterhalb eines vorbestimmten Ganges des Getriebes eingelegt;
- der aktuelle Gradient der Drehzahl oder des Drehmoments des Antriebsmotors liegt oberhalb eines vorbestimmten Gradients der Drehzahl oder des Drehmoments;
- die aktuelle Geschwindigkeit oder Beschleunigung des Kraftfahrzeugs liegt oberhalb einer vorbestimmten Geschwindigkeit oder Beschleunigung des Kraftfahrzeugs;
- es liegt ein Getriebeschaltbefehl vor oder es liegt ein Getriebeschaltbefehl zum Herunterschalten in einen niedrigeren Gang vor.

Gemäß einer zweiten Ausführungsform der Erfindung umfasst ein Verfahren zum Steuern eines in einem Antriebsstrang eines Kraftfahrzeugs angeordneten hydrodynamischen Retarders, wobei das Kraftfahrzeug einen Antriebsmotor umfasst, dessen Leistungsabgabe über ein Fußpedal, einen Hebel oder einen anderen Aktuator regelbar ist, wobei ein Rotor des hydrodynamischen Retarders über eine Trennkupplung in eine Triebverbindung mit dem Antriebsmotor und/oder dem Kraftfahrzeugantriebsstrang schaltbar ist und der hydrodynamische Retarder in einem Bremsbetrieb mit einem Arbeitsmedium befüllbar ist, um Bremsleistung auf den Kraftfahrzeugantriebsstrang und/oder den Antriebsmotor auszuüben und in einem Nicht-Bremsbetrieb vollständig oder bis auf eine Restmenge von Arbeitsmedium entleert ist und im Wesentlichen keine Bremsleistung liefert, und die eingestellte Bremsleistung wenigstens mittelbar über einen Bremsaktuator oder eine Steuervorrichtung steuerbar oder regelbar ist, die folgenden Schritte: Beim Schalten des hydrodynamischen Retarders vom Bremsbetrieb mittels des Bremsaktuators oder der Steuervorrichtung in den Nicht-Bremsbetrieb erfolgt das Öffnen der Trennkupplung mit variierender zeitlicher Verzögerung in Abhängigkeit wenigstens einer der nachfolgenden Größen:
- ein Fahrerprofil eines Fahrers, welcher Bremsleistung des hydrodynamischen Retarders über den Bremsaktuator oder die Steuervorrichtung anfordert;
- der Gradient der Betätigung des Bremsaktuators oder der Steuervorrichtung;
- der Gradient eines Soll-Werts für einen Steuerdruck zum Einstellen eines Füllungsgrades des hydrodynamischen Retarders oder die Anzahl von Änderungen des Soll-Wertes über einer vorgegebenen Zeitspanne;
- die Anzahl und/oder Art der Anforderung von Bremsleistung des hydrodynamischen Retarders in einer zurückliegenden Zeitspanne;
- die angefallene Schaltarbeit beim Schließen der Trennkupplung innerhalb einer zurückliegenden Zeitspanne.

Bevorzugt erfolgt das Öffnen der Trennkupplung beim Schalten des hydrodynamischen Retarders vom Bremsbetrieb in den Nicht-Bremsbetrieb mit variierender zeitlicher Verzögerung in Abhängigkeit wenigstens einer der nachfolgenden Bedingungen:
- ein erfasstes Fahrerprofil eines Fahrers, welcher Bremsleistung des hydrodynamischen Retarders über den Bremsaktuator oder die Steuervorrichtung anfordert, entspricht einem vorbestimmten Fahrerprofil;
- der aktuelle Gradient des Bremsaktuators oder der Steuervorrichtung liegt oberhalb eines vorbestimmten Gradienten der Betätigung;
- der aktuelle Gradient eines Soll-Werts für einen Steuerdruck zum Einstellen eines Füllungsgrades des hydrodynamischen Retarders oder die Anzahl von Änderungen des Soll-Wertes über der vorgegebenen Zeitspanne liegt oberhalb eines vorbestimmten Gradienten eines Soll-Werts für den Steuerdruck oder oberhalb einer vorbestimmten Anzahl von Änderungen;
- die Anzahl und/oder Art der Anforderung von Bremsleistung des hydrodynamischen Retarders in einer zurückliegenden Zeitspanne entspricht einer vorbestimmten Art der Anforderung;
- die Summe der beim Schließen der Trennkupplung angefallenen Schaltarbeit innerhalb einer zurückliegenden Zeitspanne liegt oberhalb einer vorbestimmten Summe.

Gemäß einer dritten Ausführungsform der Erfindung umfasst ein Verfahren zum Steuern eines in einem Antriebsstrang eines Kraftfahrzeugs angeordneten hydrodynamischen Retarders, wobei das Kraftfahrzeug einen Antriebsmotor umfasst, dessen Leistungsabgabe über ein Fußpedal, einen Hebel oder einen anderen Aktuator regelbar ist, wobei ein Rotor des hydrodynamischen Retarders über eine Trennkupplung in eine Triebverbindung mit dem Antriebsmotor und/oder dem Kraftfahrzeugantriebsstrang schaltbar ist und der hydrodynamische Retarder in einem Bremsbetrieb mit einem Arbeitsmedium befüllbar ist, um Bremsleistung auf den Kraftfahrzeugantriebsstrang und/oder den Antriebsmotor auszuüben und in einem Nicht-Bremsbetrieb vollständig oder bis auf eine Restmenge von Arbeitsmedium entleert ist und im Wesentlichen keine Bremsleistung liefert, und die eingestellte Bremsleistung wenigstens mittelbar über einen Bremsaktuator oder eine Steuervorrichtung steuerbar oder regelbar ist, die folgenden Schritte: Beim Schalten des hydrodynamischen Retarders vom Bremsbetrieb mittels des Bremsaktuators oder der Steuervorrichtung in den Nicht-Bremsbetrieb erfolgt das Öffnen der Trennkupplung mit variierender zeitlicher Verzögerung in Abhängigkeit wenigstens einer der nachfolgenden Größen:
- der Schaltzustand eines im Kraftfahrzeugantriebsstrang angeordneten Aggregats;
- der Schaltzustand eines Geschwindigkeitsregelsystems und/oder Abstandsregelsystems des Kraftfahrzeugs;
- der Ladezustand oder Schaltzustand eines Energiespeichers zum Antrieb eines im Kraftfahrzeugantriebsstrang angeordneten zusätzlichen Antriebsmotors zum Einspeisen von Antriebsleistung in den Kraftfahrzeugantriebsstrang oder zum Antreiben von Aggregaten;
- die erfasste Fahrbahnbeschaffenheit;
- die Beladung oder das Gesamtgewicht des Kraftfahrzeugs;
- die Neigung oder der Kurvenverlauf der Fahrstrecke, auf der sich das Kraftfahrzeug gerade bewegt oder die Neigung oder der Kurvenverlauf eines vorbestimmten, zu befahrenden Fahrstreckenabschnitts, auf welchem sich das Fahrzeug bewegen wird;
- ein Informationssignal aus einem Fahrerassistenzsystem, einer Fahrzeug-zu-Fahrzeug-Kommunikationsverbindung oder einer Verkehrsflusserkennungsvorrichtung.

Bevorzugt erfolgt das Öffnen der Trennkupplung beim Schalten des hydrodynamischen Retarders vom Bremsbetrieb in den Nicht-Bremsbetrieb mit variierender zeitlicher Verzögerung in Abhängigkeit wenigstens einer der nachfolgenden Bedingungen:
- der aktuelle Ladezustand oder Schaltzustand eines Energiespeichers zum Antrieb eines im Kraftfahrzeugantriebsstrang angeordneten zusätzlichen Antriebsmotors zum Einspeisen von Antriebsleistung in den Kraftfahrzeugantriebsstrang oder zum Antreiben von Aggregaten liegt unterhalb eines vorbestimmten Ladezustands oder entspricht einem vorbestimmten Schaltzustand;
- die erfasste Beladung oder das Gesamtgewicht des Kraftfahrzeugs liegt oberhalb einer vorbestimmten Beladung oder eines Gesamtgewichts;
- die aktuelle Neigung oder der aktuelle Kurvenverlauf der Fahrstrecke, auf der sich das Kraftfahrzeug gerade bewegt oder die Neigung oder der Kurvenverlauf eines vorbestimmten, zu befahrenden Fahrstreckenabschnitts, auf welchem sich das Fahrzeug bewegen wird, liegt oberhalb einer bestimmten Neigung oder eines Kurvenverlaufs.

Einzelne oder alle Merkmale der drei Ausführungsformen können auch miteinander kombiniert werden.

Alternativ kann bei den dargestellten Ausführungsformen bei dem hydrodynamischen Retarder, welcher einen umlaufenden beschaufelten Rotor und einen beschaufelten Stator oder bei Ausführung als Gegenlaufretarder einen umlaufenden und einen in Gegenrichtung hierzu umlaufenden beschaufelten Gegenlaufrotor aufweist eine Trennkupplung vorgesehen sein, sodass der Gegenlaufrotor im Bremsbetrieb über den Antriebsstrang mit der geschlossenen Trennkupplung angetrieben wird oder der Stator im Bremsbetrieb mit der geschlossenen Trennkupplung stationär gegen ein stehendes Bauteil abgestützt wird und beim Übergang vom Bremsbetrieb zum Nichtbremsbetrieb der Arbeitsraum entleert und die Trennkupplung geöffnet wird, wodurch der Stator freigegeben und bei Ausführung als Gegenlaufretarder der Gegenlaufrotor freigegeben wird, sodass dieser in Umfangsrichtung des hydrodynamischen Retarders mit dem Arbeitsmedium umläuft, also von dem Arbeitsmedium mitgeschleppt wird und mit diesem mittrudelt.

Dabei bedeutet variierende zeitliche Verzögerung im Sinne der vorliegenden Erfindung, dass gerechnet von der Schaltanforderung, welche den Übergang vom Bremsbetrieb zum Nicht-Bremsbetrieb auslöst, das Öffnen der Trennkupplung erst nach einer vorbestimmten Zeitspanne erfolgt. Die Schaltanforderung kann dabei manuell vom Fahrer durch Betätigen des zum Beispiel als Wählhebel ausgeführten Bremsaktuators in eine Aus-Stellung oder durch Vorgabe mittels der Steuervorrichtung erfolgen. Der besagte Übergang von Brems- in den Nicht-Bremsbetrieb kann auch durch eine Anforderung eines Retarderbremsmoments von im Wesentlichen 0 Nm charakterisiert sein. Eine solche Zeitspanne kann beispielsweise zwischen 0 (sofortiges Öffnen) oder beispielsweise 5, 10, 15, 30, 60 Sekunden oder mehr betragen. Die Länge der Zeitspanne, welche demnach zwischen 0 und einer vorgebebenen maximalen Zeitspanne variiert, wird in Abhängigkeit einer oder mehrerer der zuvor genannten Größen der drei erfindungsgemäßen Alternativen eingestellt.

Bevorzugt wird beim Schalten des hydrodynamischen Retarders vom Bremsbetrieb in den Nicht-Bremsbetrieb und Vorliegen wenigstens einer der genannten Bedingungen die Trennkupplung um eine erste Zeitspanne verzögert geöffnet, wohingegen die Trennkupplung unmittelbar oder um eine zweite Zeitspanne verzögert geöffnet wird, wenn nicht mindestens eine der genannten Bedingungen vorliegt. Die erste Zeitspanne ist dabei größer als die zweite Zeitspanne. Beim Vorliegen der genannten Bedingungen wird die Trennkupplung später geöffnet, sodass der Retarder länger am Kraftfahrzeugantriebsstrang angekoppelt bleibt als in dem Fall, in welchem diese Bedingung nicht vorliegt. Dann kann die Trennkupplung vergleichsweise schneller, beispielsweise sofort, geöffnet werden.

Die Trennkupplung wird besonders vorteilhaft automatisch beim Vorliegen der oben genannten Größen oder Bedingungen zeitverzögert geöffnet.

Ferner kann gemäß allen Ausführungsformen des Verfahrens der Steuervorrichtung eine Prioritätslogik zugeordnet sein, welche ein Öffnen der Trennkupplung immer dann verhindert, wenn eine Bremsleistungsanforderung für eine dem Antriebsmotor zugeordnete Motorbremse und/oder den hydrodynamischen Retarder vorliegt. Anders ausgedrückt erfolgt ein Öffnen der Trennkupplung nur dann, wenn sich das Fahrzeug nicht in einem Bremsbetrieb befindet.

Gemäß einer Ausführungsform kann das Schließen der Trennkupplung und/oder das Öffnen der Trennkupplung manuell ausgelöst werden, so dass der Fahrer einen aktiven Einfluss hierauf nehmen kann.

Generell kann beim Übergang vom Bremsbetrieb in den Nicht-Bremsbetrieb mit dem Öffnen der Trennkupplung gewartet werden, wenn sich das Kraftfahrzeug insbesondere in einem Traktionsbetrieb befindet. Mit Traktionsbetrieb ist dabei jener Zustand des Kraftfahrzeugs gemeint, bei welchem durch Betätigen des Antriebsmotors beziehungsweise durch Gasgeben eine Leistungseinspeisung vom Antriebsmotor in den Kraftfahrzeugantriebstrang mit einer Drehzahl oder einem Drehmoment des Antriebsmotors oberhalb einer Leerlaufdrehzahl oder eines vorbestimmten Drehmoments (zum Beispiel 0 Nm) bewirkt wird. Das Kraftfahrzeug kann sich auch in einem Schubbetrieb, in welchem der Antriebsmotor mit Leerlaufdrehzahl umläuft oder bei umgekehrtem Leistungsfluss durch die Antriebsräder des Kraftfahrzeugs beschleunigt wird, befinden.

Befindet sich das Kraftfahrzeug im Traktionsbetrieb, wird mit dem Öffnen der Trennkupplung eine vorbestimmte Zeitspanne gewartet. Damit wird in der Praxis verhindert, dass insbesondere nur durch kurzzeitiges, wiederholtes Betätigen des Fußpedals und Zurücknehmen desselben, was einen ständigen Wechsel zwischen einem Traktionsbetrieb und einem Schubbetrieb bedeutet, die Trennkupplung unnötig oft geöffnet und geschlossen wird.

Befindet sich das Kraftfahrzeug hingegen im Schubbetrieb, kann ebenfalls mit dem Öffnen der Trennkupplung eine vorbestimmte Zeitspanne gewartet werden. Dabei kann auch die Bedingung mit einbezogen werden, dass innerhalb dieser Zeitspanne eine wiederholte Betätigung des hydrodynamischen Retarder ausgeschlossen ist und/oder bei Vorsehen einer dem Antriebsmotor zugeordneten Motorbremse zwischenzeitlich keine Bremsleistung mit dieser angefordert wird.

Gemäß einer weiteren Ausführungsform der Erfindung umfasst ein hydrodynamischer Retarder für einen Kraftfahrzeugantriebsstrang einen über einen Antrieb in Umlauf versetzbaren Rotor und einen ortsfesten oder in Gegenrichtung zum Rotor umlaufenden Stator, wobei der Rotor und der Stator beschaufelte Räder umfassen, die miteinander einen mit Arbeitsmedium befüllbaren Arbeitsraum ausbilden. Der Antrieb ist dabei mit einer Trennkupplung versehen, mittels welcher der Rotor zu dessen Stilllegung vom Antrieb abkoppelbar oder bei Ausbildung als Gegenlaufretarder der Gegenlaufrotor vom Antrieb abkoppelbar oder der Stator von dem stehenden Bauteil trennbar ist, sodass der Stator oder bei Ausbildung als Gegenlaufretarder der Gegenlaufrotor freigebbar ist und dieser in Umfangsrichtung des hydrodynamischen Retarders mit dem Arbeitsmedium umläuft, sowie eine Steuervorrichtung, welche das Öffnen und Schließen der Trennkupplung zum Schalten des hydrodynamischen Retarders zwischen einem Bremsbetrieb und einem Nicht-Bremsbetrieb steuert. Ferner ist wenigstens einer oder eine Vielzahl von Sensoren zur Erfassung von aktuellen Betriebsgrößen des Kraftfahrzeugantriebsstrangs, des Kraftfahrzeugs und/oder zur Erfassung von Umgebungsparametern vorgesehen. Die Steuervorrichtung ist dabei derart eingerichtet, dass sie ein erfindungsgemäßes Verfahren ausführt, sodass beim Schalten des hydrodynamischen Retarders vom Bremsbetrieb in den Nicht-Bremsbetrieb das Öffnen der Trennkupplung mit variierender zeitlicher Verzögerung in Abhängigkeit wenigstens der einen Größe, welche über den wenigstens einen Sensor erfasst oder aus wenigstens einer ihr zugeleiteten Eingangsgröße bestimmt wird, erfolgt.

Die Steuervorrichtung kann dabei derart ausgeführt sein, dass diese alle drei Ausführungsformen des Verfahrens einzeln oder in Kombination ausführt.

Die Erfindung soll nachfolgend anhand eines Ausführungsbeispiels exemplarisch beschrieben werden.

Es zeigt:

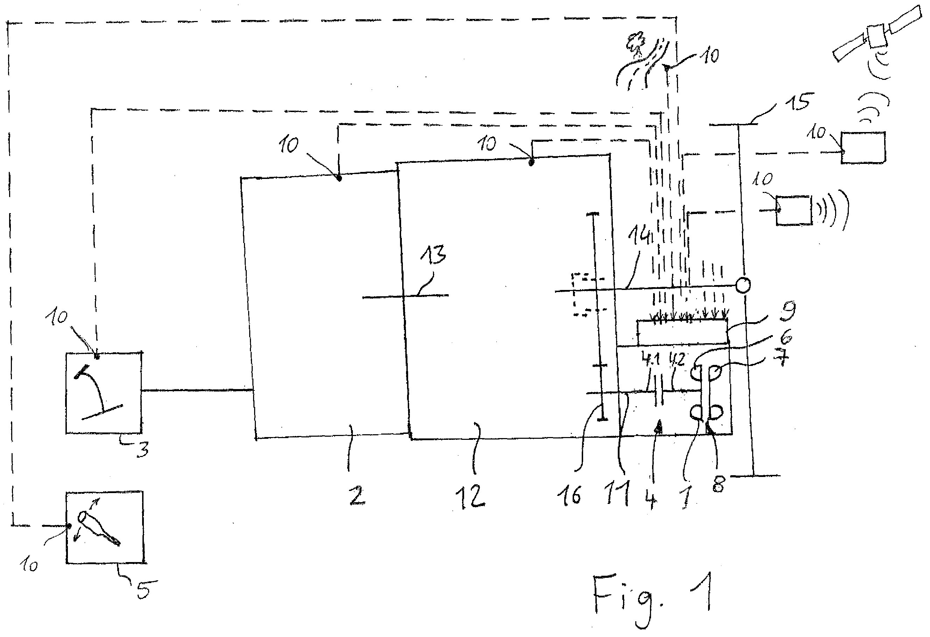

- Figur 1: einen Kraftfahrzeugantriebsstrang mit einem erfindungsgemäß angesteuerten über eine Trennkupplung abschaltbaren hydrodynamischen Retarder.

In der Figur 1 ist sehr schematisch ein Kraftfahrzeugantriebsstrang mit einem Antriebsmotor 2, hier als Verbrennungsmotor ausgeführt, und einem diesem nachgeordneten Getriebe 12, beispielweise Automatgetriebe oder automatisiertes Schaltgetriebe oder Handschaltgetriebe, dargestellt. Das Getriebe 12 weist eine Getriebeeingangswelle 13 sowie eine Getriebeausgangswelle 14 auf. Über die Getriebeausgangswelle 14 werden Antriebsräder 15 des Kraftfahrzeugs angetrieben.

Vorliegend kann mittels eines Fußpedals 3 die Leistungsabgabe des Antriebsmotors 2 je nach Stellung des Fußpedals 3 eingestellt werden. Anstelle des Fußpedals 3 könnte auch ein Hebel oder sonstiger Aktuator zur Regelung der Leistungsabgabe des Antriebsmotors 2 herangezogen werden.

Auf einem sogenannten Nebenabtrieb 16 des Getriebes 12 ist sekundärseitig ein hydrodynamischer Retarder 1 positioniert. Der Nebenabtrieb 16 stellt somit den Antrieb 11 des hydrodynamischen Retarders 1 dar. Jedoch könnte der hydrodynamische Retarder 1 auch an einer anderen Position, beispielsweise innerhalb des Getriebes 12, auf der Primärseite des Getriebes 12 oder an dem Antriebsmotor 2 primärseitig oder sekundärseitig oder auf einem Nebenabtrieb desselben vorgesehen sein.

Der hydrodynamische Retarder 1 weist einen Rotor 6 und einen Stator 7 auf, die gemeinsam den Arbeitsraum 8 ausbilden. Der Rotor 6 ist über eine Trennkupplung 4 am Antrieb 11 angeschlossen. Die Trennkupplung 4 weist eine Primärseite 4.1 und eine Sekundärseite 4.2 auf, sodass zum Einschalten des Retarders 1 die Trennkupplung 4 geschlossen wird, bis nach einer Schlupfüberbrückung die Sekundärseite 4.2 mit der Drehzahl der Primärseite 4.1 umläuft, und zum Ausschalten des Retarders 1 die Trennkupplung 4 wieder geöffnet wird.

Dem hydrodynamischen Retarder 1 und/oder der Trennkupplung 4 ist eine Steuervorrichtung 9 zugeordnet, welche das Schließen der Trennkupplung 4 und das Befüllen des Arbeitsraums 8 des hydrodynamischen Retarders 1 steuert. Es könnten auch mehrere (nicht gezeigte) Steuervorrichtungen vorgesehen sein, die jeweils dem hydrodynamischen Retarder 1 und der Trennkupplung 4 zugeordnet sein könnten.

Unter Trennkupplung ist vorliegend jedes Bauteil zu verstehen, das in einem ersten Betriebszustand eine Leistungsübertragung, insbesondere mechanische Leistungsübertragung herstellt und in einem zweiten Betriebszustand unterbricht, somit beispielsweise Synchronelemente, Reibkupplungen und anderes.

Zur Einstellung einer Bremsleistung mit dem hydrodynamischen Retarder 1 ist ein Bremsaktuator 5, hier in Form eines Wählhebels, vorgesehen. Hierdurch kann eine Bremsstufe aus einer Vielzahl von Bremsstufen eingestellt werden, wobei jeder Bremsstufe ein bestimmter Bremsmomentenverlauf zur Einstellung einer bestimmten Bremsleistung zugeordnet ist.

Der Steuervorrichtung 9 werden über die gestrichelt dargestellten Linien Informationen von Sensoren oder Eingangsgrößen, beispielsweise von einer dem Getriebe 12 zugeordneten Getriebesteuerung oder einer Kraftfahrzeugsteuerung, besonders bevorzugt über ein CAN-Bus-System oder über andere leitende Verbindungen zugeleitet.

In der Figur 1 ist weiterhin beispielhaft eine Mehrzahl von Sensoren 10 dargestellt, wobei hier jeweils ein Sensor einer entsprechenden Komponente des Kraftfahrzeugantriebsstrangs zugeordnet ist. Im Uhrzeigersinn gesehen sind die folgenden Komponenten mit jeweils einem Sensor 10 ausgestattet: der als Bremsaktuator 5 ausgeführte Wählhebel, das Fußpedal 3, der Antriebsmotor 2, das Getriebe 12. Auch ein die Umgebungsbedingungen einer Fahrstrecke, auf der sich das Kraftfahrzeug bewegt, erfassender Sensor oder mit Sensoren 10 ausgestattete Einrichtungen, die Daten über den bevorstehenden Verlauf der Fahrstrecke (Navigationssystem) sowie ein Abstandsregelsystem und/oder ein Geschwindigkeitsregelsystem können vorgesehen sein. Ebenfalls kommen auch Fahrerassistenzsysteme, Fahrzeug-zu Fahrzeug-Kommunikationsverbindungen oder Verkehrsflusserkennungsvorrichtungen mittels denen Informationen über das aktuelle Verkehrsaufkommen sowie Staus an die Steuervorrichtung 9 übermittelt werden können, vorgesehen sein. Bei einem hohen Verkehrsaufkommen kann dann beispielsweise die Trennkupplung 4 länger geschlossen bleiben. Anstelle der Sensoren 10 können auch Eingangsgrößen aus nicht dargestellten Getriebe- oder Kraftfahrzeugsteuerungen an die Steuervorrichtung 9 übermittelt werden.

Allgemein können Informationssignale von Komponenten, die Teil von Fahrerassistenzsystemen sind oder von insbesondere drahtlosen Netzwerken (Funknetze), mit denen das Fahrzeug kommuniziert oder selbst einen Teil dieser darstellt, als Auslöser zum Verzögern des Öffnens der Trennkupplung herangezogen werden. Beispielhaft können Informationssignale wie die aktuelle zulässige Geschwindigkeit (Geschwindigkeitsbegrenzung) eines Streckenabschnitts auf der vom Fahrzeug zu befahrenden Strecke, welche mittels eines Verkehrszeichenerkennungssystems erfasst oder aus in einem Navigationssystem hinterlegten Daten entnommen wurden, herangezogen werden.

Selbstverständlich ist diese Aufzählung der hier dargestellten Komponenten und Einrichtungen nicht abschließend. Auch die hier dargestellte Kombination dieser ist rein exemplarisch, sodass mehr oder weniger als die hier dargestellten Sensoren und Einrichtungen vorgesehen sein könnten.

Dabei wird nun stets beim Übergang vom Bremsbetrieb in den Nicht-Bremsbetrieb in Abhängigkeit der von dem wenigstens einen Sensor 10 aufgenommenen Größen oder Eingangsgrößen die Trennkupplung 4 mit variierender zeitlicher Verzögerung geöffnet.

Besonders bevorzugt vergleicht die Steuervorrichtung 9 die von den Sensoren 10 erfassten Größen oder der Steuervorrichtung 9 zugeleiteten Eingangsgrößen mit vorbestimmten und in der Steuervorrichtung 9 hinterlegten Größen. In Abhängigkeit der hieraus resultierenden Bedingungen wird die Trennkupplung 4 nun vergleichsweise früher oder später geöffnet. Wird beispielsweise der als Wählhebel ausgeführte Bremsaktuator 5 vergleichsweise schnell aus einer eine bestimmte Bremsleistung darstellenden Bremsstufe in seine Aus-Stellung, in welcher im Wesentlichen kein Bremsmoment mit dem Retarder 1 angefordert wird, verbracht, so wird vorliegend ein vergleichsweise hoher Gradient der Betätigung von dem ihm zugeordneten Sensor 10 erfasst. Der aktuell erfasste Gradient der Betätigung des Bremsaktuators 5 wird nun mit dem in der Steuervorrichtung 9 hinterlegten, vorbestimmten Gradienten verglichen. Liegt hier der erfasste Gradient unterhalb des vorbestimmten Gradienten, so wird die Trennkupplung 4 langsamer geöffnet, beispielsweise nach 10 Sekunden, wohingegen, wenn der erfasste Gradient oberhalb des vorbestimmten Gradienten liegt, wird die Trennkupplung 4 schneller, beispielsweise bereits nach 5 Sekunden geöffnet.

Weiterhin kann beim Übergang vom Bremsbetrieb in den Nicht-Bremsbetrieb, insbesondere wenn, wie bereits ausgeführt, der Wählhebel von einer eingestellten Bremsstufe in eine Aus-Stellung verbracht wird, zusätzlich die aktuelle Stellung des Fußpedals 3 erfasst werden, um die Trennkupplung 4 in Abhängigkeit dieser Stellung zeitverzögert zu öffnen. Alternativ kann nur die Stellung des Fußpedals 3 zum zeitversetzten Öffnen der Trennkupplung 4 herangezogen werden. Neben der aktuellen Stellung wäre auch ein Gradient der Betätigung, also die Betätigungsgeschwindigkeit beim Niederdrücken oder Loslassen des Fußpedals 3 mittels des entsprechenden Sensors 10 erfassbar. Wiederum könnte nun die Trennkupplung 4 vergleichsweise später geöffnet werden, wenn sich der aktuell erfasste Gradient des Fußpedals 3 unterhalb eines vorbestimmten Gradienten befindet.

Auch könnte der Gradient der Drehzahländerung oder die aktuelle Drehzahl des Antriebsmotors 2 als Größe herangezogen werden. Beispielsweise kann in der Nähe der Leerlaufdrehzahl des Antriebsmotors 2, insbesondere dann, wenn der hydrodynamische Retarder als Primärretarder ausgeführt ist, die Trennkupplung 4 beim Übergang vom Bremsbetrieb in den Nicht-Bremsbetrieb vergleichsweise schnell, insbesondere sofort, geöffnet werden. Hierdurch wird ein Abwürgen des Antriebsmotors 2 bei geringen Drehzahlen und gleichzeitiger Bremsanforderung mit dem Retarder 1 weniger wahrscheinlich.

So kann mit dem Öffnen der Trennkupplung 4 länger gewartet werden, wenn die aktuelle Drehzahl oder der Drehzahlgradient des Antriebsmotors 2 unterhalb einer vorbestimmten Drehzahl oder eines Drehzahlgradienten liegt. So wird zum Beispiel bei beschleunigendem Kraftfahrzeug (und relativ hohem Gradienten oder hoher Drehzahl) länger mit dem Öffnen der Trennkupplung 4 gewartet. Hingegen wird die Trennkupplung 4 beim Verzögern des Kraftfahrzeugs (relativ niedriger Gradient und niedrige Drehzahl) vergleichsweise früher geöffnet.

Anstelle oder zusätzlich zu der Drehzahl des Antriebsmotors 2 kann auch die Drehzahl der im Getriebe 12 umlaufenden Wellen, wie beispielsweise die Getriebeeingangswelle 13, Getriebeausgangswelle 14 oder die Drehzahl des Nebenabtriebs 16 als Größe, herangezogen werden. Selbstverständlich kann auch ein Sensor zur Erfassung des aktuell im Getriebe 12 eingelegten Ganges vorgesehen sein, um insbesondere bei als Sekundärretarder ausgeführten Retardern in den niedrigeren Gängen die Trennkupplung 4 vergleichsweise spät zu Öffnen. Dies ist besonders vorteilhaft im Stadtverkehr mit häufigen Anfahrvorgängen sowie Fahrten in niedrigen Gängen, in denen die durch das Angekuppeltbleiben der Trennkupplung 4 im hydrodynamischen Retarder 1 entstehenden Verlustleistungen deutlich geringer sind als bei hohen Geschwindigkeiten des Kraftfahrzeugs.

Neben der Erfassung der aktuellen Betriebsgrößen des Kraftfahrzeugantriebsstrangs könnten auch Umgebungsparameter wie beispielsweise die Lufttemperatur der Umgebung oder der Fahrbahn, auf welcher sich das Kraftfahrzeug bewegt, beim Übergang vom Bremsbetrieb in den Nicht-Bremsbetrieb erfasst werden. Hierzu gehört auch die Topographie der Fahrstrecke, welche das Streckenprofil beinhaltet, welches das Kraftfahrzeug innerhalb einer vorgegebenen, unmittelbar bevorstehenden Zeitspanne und/oder Wegstrecke bei einem vorgegebenen Fahrziel zurücklegen muss. Eine solche Vorgabe eines Fahrziels oder einer bevorstehenden Zeitspanne kann, wie in Figur 1 angedeutet, mittels eines Navigationssystems erfolgen. Auch die Neigung der Fahrbahn, insbesondere in Fahrtrichtung des Kraftfahrzeugs gesehen, oder der Kurvenverlauf der Fahrstrecke können als Größen zur Beurteilung ob die Trennkupplung 4 vergleichsweise früher oder später geöffnet wird, herangezogen werden. Die aktuelle Neigung oder der aktuelle Kurvenverlauf der Fahrstrecke kann über entsprechende Sensoren, wie Beschleunigungs- oder Luftdrucksensoren, erfasst werden. Eine bevorstehende Neigung oder ein bevorstehender Kurvenverlauf, den das Fahrzeug befahren wird, kann über das Navigationssystem realisiert werden. So kann beispielsweise in einem Gefälle die Trennkupplung länger oder über das gesamte Gefälle hinweg geschlossen bleiben. Die dafür notwendige Zeitspanne wird im Voraus von der Steuervorrichtung 9 anhand des vorgegebenen Streckenprofils errechnet. Auch vor Kurven oder Kreuzungen kann die Trennkupplung 4 entsprechend länger geschlossen bleiben und bevorzugt erst dann geöffnet werden, wenn diese mit dem Kraftfahrzeug durchquert wurden.

Auch kann die Trennkupplung 4 beim Übergang vom Brems- in den Nicht-Bremsbetrieb vergleichsweise länger geschlossen bleiben, wenn ein Geschwindigkeitsregelsystem und/oder Abstandsregelsystem des Kraftfahrzeugs aktiviert ist oder einen bestimmten Schaltzustand aufweist. Bei diesen Systemen wird der Abstand insbesondere zum vorausfahrenden Fahrzeug beziehungsweise die aktuelle Geschwindigkeit des Kraftfahrzeugs ständig als Regelgröße zurückgeführt, was zu einem ständigen Wechsel zwischen dem Traktions- und Schubbetrieb führen kann. Hierdurch wird zur Einstellung der vorgegebenen Geschwindigkeit des Kraftfahrzeugs jeweils abwechselnd der Antriebsmotor 2 zur Beschleunigung oder der hydrodynamische Retarder 1 zum Abbremsen desselben vermehrt betätigt. Wird nun beim aktivierten Geschwindigkeits- und/oder Abstandsregelsystem die Trennkupplung 4 (Vorliegen des entsprechenden Schaltzustands eines solchen Systems) vergleichsweise später geschlossen, so werden häufige An- und Abkoppelvorgänge mit der Trennkupplung 4 vermieden. Besonders vorteilhaft kann die Trennkupplung 4 für die gesamte Dauer des aktivierten Systems angekoppelt bleiben und erst beim Deaktivieren desselben geöffnet werden.

Auch kann die Steuervorrichtung 9 derart eingerichtet sein, dass sie ein Fahrerprofil eines Fahrers, welcher Bremsleistung mit dem hydrodynamischen Retarder anfordert, erfasst. Entspricht das erfasste Fahrerprofil einem vorgegebenen Profil, so kann die Trennkupplung 4 entsprechend in ihrem Öffnen zeitverzögert variiert werden. Erkennt die Steuervorrichtung 9 beispielsweise, dass ein Fahrer den hydrodynamischen Retarder 1 stets zwischen einer Maximalstellung und der Aus-Stellung vermehrt ein- und ausschaltet, so kann die Trennkupplung 4 beim Übergang vom Bremsbetrieb in den Nicht-Bremsbetrieb zunächst länger geschlossen bleiben.

Ebenfalls kann der Steuervorrichtung 9 eine Prioritätslogik zugeordnet sein, welche eine Gewichtung hinsichtlich des Vorrangs einzelner, mit einer Mehrzahl von Sensoren 10 erfassten Größen oder Eingangsgrößen gegenüber den verbleibenden Größen vornimmt.

Alternativ oder zusätzlich können auch die sich bei der Prüfung der erfassten Größen mit den vorbestimmten Größen einzeln ergebenden Zeitspannen zum verzögerten Öffnen der Trennkupplung 4 zu einer Gesamtverzögerung aufsummiert werden.

### Bezugszeichenliste

- 1: hydrodynamischer Retarder
- 2: Antriebsmotor
- 3: Fußpedal
- 4: Trennkupplung
- 4.1: Primärseite
- 4.2: Sekundärseite
- 5: Bremsaktuator
- 6: Rotor
- 7: Stator
- 8: Arbeitsraum
- 9: Steuervorrichtung
- 10: Sensor
- 11: Antrieb
- 12: Getriebe
- 13: Getriebeeingangswelle
- 14: Getriebeausgangswelle
- 15: Antriebsräder
- 16: Nebenabtrieb

## Patentansprüche

1. Verfahren zum Steuern eines in einem Antriebsstrang eines Kraftfahrzeugs angeordneten hydrodynamischen Retarder (1), wobei das Kraftfahrzeug einen Antriebsmotor (2) umfasst, dessen Leistungsabgabe über ein Fußpedal (3), einen Hebel oder einen anderen Aktuator regelbar ist, wobei ein Rotor (6) des hydrodynamischen Retarders (1) über eine Trennkupplung (4) in eine Triebverbindung mit dem Antriebsmotor (2) und/oder dem Kraftfahrzeugantriebsstrang schaltbar ist und der hydrodynamische Retarder (1) in einem Bremsbetrieb mit einem Arbeitsmedium befüllbar ist, um eine Bremsleistung auf den Kraftfahrzeugantriebsstrang und/oder den Antriebsmotor (2) auszuüben und in einem Nicht-Bremsbetrieb vollständig oder bis auf eine Restmenge von Arbeitsmedium entleert ist und im Wesentlichen keine Bremsleistung liefert, und die eingestellte Bremsleistung wenigstens mittelbar über einen Bremsaktuator (5) oder eine Steuervorrichtung steuerbar oder regelbar ist, **gekennzeichnet durch** die folgenden Schritte:
beim Schalten des hydrodynamischen Retarders (1) vom Bremsbetrieb mittels des Bremsaktuators (5) oder der Steuervorrichtung in den Nicht-Bremsbetrieb erfolgt das Öffnen der Trennkupplung (4) mit variierender zeitlicher Verzögerung in Abhängigkeit wenigstens einer der nachfolgenden Größen:
- der Schaltzustand einer dem Antriebsmotor (2) zugeordneten Motorbremse, mittels der Bremsleistung auf den Kraftfahrzeugantriebsstrang ausübbar ist;
- die Stellung des Fußpedals (3), des Hebels oder eines anderen Aktuators zur Regelung der Leistungsabgabe des Antriebsmotors (2);
- der Gangstellung eines im Kraftfahrzeugantriebsstrang angeordneten Getriebes;
- das Vorliegen eines Getriebeschaltbefehls, mit welchem ein Gangwechsel in einem Schaltgetriebe des Kraftfahrzeugs angefordert wird; - der Gradient der Drehzahl oder des Drehmoments des Antriebsmotors (2), einer Abtriebswelle des Getriebes oder von Antriebsrädern des Kraftfahrzeugs; - die aktuelle Geschwindigkeit oder Beschleunigung des Kraftfahrzeugs. 2. Verfahren zum Steuern eines in einem Antriebsstrang eines Kraftfahrzeugs angeordneten hydrodynamischen Retarder (1), welcher einen umlaufenden Rotor (6) und einen Stator (7) oder einen umlaufenden Rotor (6) und einen in Gegenrichtung hierzu umlaufenden Gegenlaufrotor aufweist, die gemeinsam zur Einstellung einer Bremsleistung einen in einem Bremsbetrieb mit Arbeitsmedium befüllten und in einem Nicht-Bremsbetrieb vom Arbeitsmedium entleerten Arbeitsraum (8) ausbilden, wobei der Gegenlaufrotor im Bremsbetrieb über den Antriebsstrang mit einer geschlossenen Trennkupplung (4) angetrieben wird oder der Stator (7) im Bremsbetrieb mit einer geschlossenen Trennkupplung (4) stationär gegen ein stehendes Bauteil abgestützt wird und beim Übergang vom Bremsbetrieb zum Nichtbremsbetrieb der Arbeitsraum (8) entleert und die Trennkupplung (4) geöffnet wird, wodurch der Stator (7) freigegeben und bei Ausführung als Gegenlaufretarder der Gegenlaufrotor freigegeben wird, sodass dieser in Umfangsrichtung des hydrodynamischen Retarders (1) mit dem Arbeitsmedium umläuft, und die eingestellte Bremsleistung wenigstens mittelbar über einen Bremsaktuator (5) oder eine Steuervorrichtung steuerbar oder regelbar ist, wobei das Kraftfahrzeug einen Antriebsmotor (2) umfasst, dessen Leistungsabgabe über ein Fußpedal (3), einen Hebel oder einen anderen Aktuator regelbar ist, **gekennzeichnet durch** die folgenden Schritte:

2. beim Schalten des hydrodynamischen Retarders (1) vom Bremsbetrieb mittels des Bremsaktuators (5) oder der Steuervorrichtung in den Nicht-Bremsbetrieb erfolgt das Öffnen der Trennkupplung (4) mit variierender zeitlicher Verzögerung in Abhängigkeit wenigstens einer der nachfolgenden Größen:
- der Schaltzustand einer dem Antriebsmotor (2) zugeordneten Motorbremse, mittels der Bremsleistung auf den Kraftfahrzeugantriebsstrang ausübbar ist;
- die Stellung des Fußpedals (3), des Hebels oder eines anderen Aktuators zur Regelung der Leistungsabgabe des Antriebsmotors (2);
- der Gangstellung eines im Kraftfahrzeugantriebsstrang angeordneten Getriebes;
- das Vorliegen eines Getriebeschaltbefehls, mit welchem ein Gangwechsel in einem Schaltgetriebe des Kraftfahrzeugs angefordert wird;
- der Gradient der Drehzahl oder des Drehmoments des Antriebsmotors (2), einer Abtriebswelle des Getriebes oder von Antriebsrädern des Kraftfahrzeugs;
- die aktuelle Geschwindigkeit oder Beschleunigung des Kraftfahrzeugs.

3. Verfahren zum Steuern eines in einem Antriebsstrang eines Kraftahrzeugs angeordneten hydrodynamischen Retarder (1), wobei das Kraftahrzeug einen Antriebsmotor (2) umfasst, dessen Leistungsabgabe über ein Fußpedal (3), einen Hebel oder einen anderen Aktuator regelbar ist, wobei ein Rotor (6) des hydrodynamischen Retarders (1) über eine Trennkupplung (4) in eine Triebverbindung mit dem Antriebsmotor (2) und/oder dem Kraftfahrzeugantriebsstrang schaltbar ist und
der hydrodynamische Retarder (1) in einem Bremsbetrieb mit einem Arbeitsmedium befüllbar ist, um eine Bremsleistung auf den Kraftfahrzeugantriebsstrang und/oder den Antriebsmotor (2) auszuüben und in einem Nicht-Bremsbetrieb vollständig oder bis auf eine Restmenge von Arbeitsmedium entleert ist und im Wesentlichen keine Bremsleistung liefert, und die eingestellte Bremsleistung wenigstens mittelbar über einen Bremsaktuator (5) oder eine Steuervorrichtung steuerbar oder regelbar ist, **gekennzeichnet durch** die folgenden Schritte:
beim Schalten des hydrodynamischen Retarders (1) vom Bremsbetrieb mittels des Bremsaktuators (5) oder der Steuervorrichtung in den Nicht-Bremsbetrieb erfolgt das Öffnen der Trennkupplung (4) mit variierender zeitlicher Verzögerung in Abhängigkeit wenigstens einer der nachfolgenden Größen:
- ein Fahrerprofil eines Fahrers, welcher Bremsleistung des hydrodynamischen Retarders (1) über den Bremsaktuator (5) oder die Steuervorrichtung anfordert;
- der Gradient der Betätigung des Bremsaktuators (5) oder der Steuervorrichtung;
- der Gradient eines Soll-Werts für einen Steuerdruck zum Einstellen eines Füllungsgrades des hydrodynamischen Retarders (1) oder die Anzahl von Änderungen des Soll-Wertes über einer vorgegebenen Zeitspanne;
- die Anzahl und/oder Art der Anforderung von Bremsleistung des hydrodynamischen Retarders (1) in einer zurückliegenden Zeitspanne;
- die angefallene Schaltarbeit beim Schließen der Trennkupplung (4) innerhalb einer zurückliegenden Zeitspanne.

4. Verfahren zum Steuern eines in einem Antriebsstrang eines Kraftfahrzeugs angeordneten hydrodynamischen Retarder (1), welcher einen umlaufenden Rotor (6) und einen Stator (7) oder einen umlaufenden Rotor (6) und einen in Gegenrichtung hierzu umlaufenden Gegenlaufrotor aufweist, die gemeinsam zur Einstellung einer Bremsleistung einen in einem Bremsbetrieb mit Arbeitsmedium befüllten und in einem Nicht-Bremsbetrieb vom Arbeitsmedium entleerten Arbeitsraum (8) ausbilden, wobei der Gegenlaufrotor im Bremsbetrieb über den Antriebsstrang mit einer geschlossenen Trennkupplung (4) angetrieben wird oder der Stator (7) im Bremsbetrieb mit einer geschlossenen Trennkupplung (4) stationär gegen ein stehendes Bauteil abgestützt wird und beim Übergang vom Bremsbetrieb zum Nichtbremsbetrieb der Arbeitsraum (8) entleert und die Trennkupplung (4) geöffnet wird, wodurch der Stator (7) freigegeben und bei Ausführung als Gegenlaufretarder der Gegenlaufrotor freigegeben wird, sodass dieser in Umfangsrichtung des hydrodynamischen Retarders (1) mit dem Arbeitsmedium umläuft, und die eingestellte Bremsleistung wenigstens mittelbar über einen Bremsaktuator (5) oder eine Steuervorrichtung steuerbar oder regelbar ist, wobei das Kraftfahrzeug einen Antriebsmotor (2) umfasst, dessen Leistungsabgabe über ein Fußpedal (3), einen Hebel oder einen anderen Aktuator regelbar ist,
**gekennzeichnet durch** die folgenden Schritte: beim Schalten des hydrodynamischen Retarders (1) vom Bremsbetrieb mittels des Bremsaktuators (5) oder der Steuervorrichtung in den Nicht-Bremsbetrieb erfolgt das Öffnen der Trennkupplung (4) mit variierender zeitlicher Verzögerung in Abhängigkeit wenigstens einer der nachfolgenden Größen: - ein Fahrerprofil eines Fahrers, welcher Bremsleistung des hydrodynamischen Retarders (1) über den Bremsaktuator (5) oder die Steuervorrichtung anfordert; - der Gradient der Betätigung des Bremsaktuators (5) oder der Steuervorrichtung; - der Gradient eines Soll-Werts für einen Steuerdruck zum Einstellen eines Füllungsgrades des hydrodynamischen Retarders (1) oder die Anzahl von Änderungen des Soll-Wertes über einer vorgegebenen Zeitspanne; - die Anzahl und/oder Art der Anforderung von Bremsleistung des hydrodynamischen Retarders (1) in einer zurückliegenden Zeitspanne;
- die angefallene Schaltarbeit beim Schließen der Trennkupplung (4) innerhalb einer zurückliegenden Zeitspanne.

5. Verfahren zum Steuern eines in einem Antriebsstrang eines Kraftahrzeugs angeordneten hydrodynamischen Retarders (1), wobei das Kraftahrzeug einen Antriebsmotor (2) umfasst, dessen Leistungsabgabe über ein Fußpedal (3), einen Hebel oder einen anderen Aktuator regelbar ist, wobei ein Rotor (6) des hydrodynamischen Retarders (1) über eine Trennkupplung (4) in eine Triebverbindung mit dem Antriebsmotor (2) und/oder dem Kraftfahrzeugantriebsstrang schaltbar ist und der hydrodynamische Retarder (1) in einem Bremsbetrieb mit einem Arbeitsmedium befüllbar ist, um eine Bremsleistung auf den Kraftfahrzeugantriebsstrang und/oder den Antriebsmotor (2) auszuüben und in einem Nicht-Bremsbetrieb vollständig oder bis auf eine Restmenge von Arbeitsmedium entleert ist und im Wesentlichen keine Bremsleistung liefert, und die eingestellte Bremsleistung wenigstens mittelbar über einen Bremsaktuator (5) oder eine Steuervorrichtung steuerbar oder regelbar ist, **gekennzeichnet durch** die folgenden Schritte:
beim Schalten des hydrodynamischen Retarders (1) vom Bremsbetrieb mittels des Bremsaktuators (5) oder der Steuervorrichtung in den Nicht-Bremsbetrieb erfolgt das Öffnen der Trennkupplung (4) mit variierender zeitlicher Verzögerung in Abhängigkeit wenigstens einer der nachfolgenden Größen:
- der Schaltzustand eines im Kraftfahrzeugantriebsstrang angeordneten Aggregats,
- der Schaltzustand eines Geschwindigkeitsregelsystems und/oder Abstandsregelsystems des Kraftfahrzeugs;
- der Ladezustand oder Schaltzustand eines Energiespeichers zum Antrieb eines im Kraftfahrzeugantriebsstrang angeordneten zusätzlichen Antriebsmotors zum Einspeisen von Antriebsleistung in den Kraftfahrzeugantriebsstrang oder zum Antreiben von Aggregaten; - die erfasste Fahrbahnbeschaffenheit; - die Beladung oder das Gesamtgewicht des Kraftfahrzeugs; - die Neigung oder
der Kurvenverlauf der Fahrstrecke, auf der sich das Kraftfahrzeug gerade bewegt oder die Neigung oder der Kurvenverlauf eines vorbestimmten, zu befahrenden Fahrstreckenabschnitts, auf welchem sich das Fahrzeug bewegen wird; - ein Informationssignal aus einem Fahrerassistenzsystem, einer Fahrzeug-zu-Fahrzeug-Kommunikationsverbindung oder einer Verkehrsflusserkennungsvorrichtung.

6. Verfahren zum Steuern eines in einem Antriebsstrang eines Kraftfahrzeugs angeordneten hydrodynamischen Retarder (1), welcher einen umlaufenden Rotor (6) und einen Stator (7) oder einen umlaufenden Rotor (6) und einen in Gegenrichtung hierzu umlaufenden Gegenlaufrotor aufweist, die gemeinsam zur Einstellung einer Bremsleistung einen in einem Bremsbetrieb mit Arbeitsmedium befüllten und in einem Nicht-Bremsbetrieb vom Arbeitsmedium entleerten Arbeitsraum (8) ausbilden, wobei der Gegenlaufrotor im Bremsbetrieb über den Antriebsstrang mit einer geschlossenen Trennkupplung (4) angetrieben wird oder der Stator (7) im Bremsbetrieb mit einer geschlossenen Trennkupplung (4) stationär gegen ein stehendes Bauteil abgestützt wird und beim Übergang vom Bremsbetrieb zum Nichtbremsbetrieb der Arbeitsraum (8) entleert und die Trennkupplung (4) geöffnet wird, wodurch der Stator (7) freigegeben und bei Ausführung als Gegenlaufretarder der Gegenlaufrotor freigegeben wird,
sodass dieser in Umfangsrichtung des hydrodynamischen Retarders (1) mit dem Arbeitsmedium umläuft, und die eingestellte Bremsleistung wenigstens mittelbar über einen Bremsaktuator (5) oder eine Steuervorrichtung steuerbar oder regelbar ist, wobei das Kraftfahrzeug einen Antriebsmotor (2) umfasst, dessen Leistungsabgabe über ein Fußpedal (3), einen Hebel oder einen anderen Aktuator regelbar ist,
**gekennzeichnet durch** die folgenden Schritte:
beim Schalten des hydrodynamischen Retarders (1) vom Bremsbetrieb mittels des Bremsaktuators (5) oder der Steuervorrichtung in den Nicht-Bremsbetrieb erfolgt das Öffnen der Trennkupplung (4) mit variierender zeitlicher Verzögerung in Abhängigkeit wenigstens einer der nachfolgenden Größen:
- der Schaltzustand eines im Kraftfahrzeugantriebsstrang angeordneten Aggregats,
- der Schaltzustand eines Geschwindigkeitsregelsystems und/oder Abstandsregelsystems des Kraftfahrzeugs;
- der Ladezustand oder Schaltzustand eines Energiespeichers zum Antrieb eines im Kraftfahrzeugantriebsstrang angeordneten zusätzlichen Antriebsmotors zum Einspeisen von Antriebsleistung in den Kraftfahrzeugantriebsstrang oder zum Antreiben von Aggregaten;
- die erfasste Fahrbahnbeschaffenheit;
- die Beladung oder das Gesamtgewicht des Kraftfahrzeugs;
- die Neigung oder der Kurvenverlauf der Fahrstrecke, auf der sich das Kraftfahrzeug gerade bewegt oder die Neigung oder der Kurvenverlauf eines vorbestimmten, zu befahrenden Fahrstreckenabschnitts, auf welchem sich das Fahrzeug bewegen wird;
- ein Informationssignal aus einem Fahrerassistenzsystem, einer Fahrzeug-zu-Fahrzeug-Kommunikationsverbindung oder einer Verkehrsflusserkennungsvorrichtung.

7. Verfahren gemäß Anspruch 1 oder 2, **dadurch gekennzeichnet, dass** beim Schalten des hydrodynamischen Retarders (1) vom Bremsbetrieb in den Nicht-Bremsbetrieb das Öffnen der Trennkupplung (4) mit variierender zeitlicher Verzögerung in Abhängigkeit wenigstens einer der nachfolgenden Bedingungen erfolgt:
- die aktuelle Stellung des Fußpedals (3), des Hebels oder eines anderen Aktuators zur Regelung der Leistungsabgabe des Antriebsmotors (2) liegt unterhalb einer vorbestimmten Stellung;
- es ist/wird aktuell ein Gang unterhalb eines vorbestimmten Ganges des Getriebes eingelegt;
- der aktuelle Gradient der Drehzahl oder des Drehmoments des Antriebsmotors (2) liegt oberhalb eines vorbestimmten Gradients der Drehzahl oder des Drehmoments;
- es liegt ein Getriebeschaltbefehl vor oder es liegt ein Getriebeschaltbefehl zum Herunterschalten in einen niedrigeren Gang vor;
- die aktuelle Geschwindigkeit oder Beschleunigung des Kraftfahrzeugs liegt unterhalb einer vorbestimmten Geschwindigkeit oder Beschleunigung des Kraftfahrzeugs.

8. Verfahren gemäß Anspruch 3 oder 4, **dadurch gekennzeichnet, dass** beim Schalten des hydrodynamischen Retarders (1) vom Bremsbetrieb in den Nicht-Bremsbetrieb das Öffnen der Trennkupplung (4) mit variierender zeitlicher Verzögerung in Abhängigkeit wenigstens einer der nachfolgenden Bedingungen erfolgt:
- ein erfasstes Fahrerprofil eines Fahrers, welcher Bremsleistung des hydrodynamischen Retarders (1) über den Bremsaktuator (5) oder die Steuervorrichtung anfordert, entspricht einem vorbestimmten Fahrerprofil;
- der aktuelle Gradient der Betätigung des Bremsaktuators (5) oder der Steuervorrichtung liegt oberhalb eines vorbestimmten Gradienten der Betätigung;
- der aktuelle Gradient eines Soll-Werts für einen Steuerdruck zum Einstellen eines Füllungsgrades des hydrodynamischen Retarders (1) oder die Anzahl von Änderungen des Soll-Wertes über der vorgegebenen Zeitspranne liegt oberhalb eines vorbestimmten Gradienten eines Soll-Werts für den Steuerdruck oder oberhalb einer vorbestimmten Anzahl von Änderungen;
- die Anzahl und/oder Art der Anforderung von Bremsleistung mit dem hydrodynamischen Retarders (1) in einer zurückliegenden Zeitspanne entspricht einer vorbestimmten Art der Anforderung und/oder liegt oberhalb einer vorbestimmten Anzahl;
- die Summe der beim Schließen der Trennkupplung (4) angefallenen Schaltarbeit innerhalb einer zurückliegenden Zeitspanne liegt oberhalb einer vorbestimmten Summe.

9. Verfahren gemäß Anspruch 5 oder 6, **dadurch gekennzeichnet, dass** beim Schalten des hydrodynamischen Retarders (1) vom Bremsbetrieb in den Nicht-Bremsbetrieb das Öffnen der Trennkupplung (4) mit variierender zeitlicher Verzögerung in Abhängigkeit wenigstens einer der nachfolgenden Bedingungen erfolgt:
- der aktuelle Ladezustand oder Schaltzustand eines Energiespeichers zum Antrieb eines im Kraftfahrzeugantriebsstrang angeordneten zusätzlichen Antriebsmotors zum Einspeisen von Antriebsleistung in den Kraftfahrzeugantriebsstrang oder zum Antreiben von Aggregaten liegt unterhalb eines vorbestimmten Ladezustands oder entspricht einem vorbestimmten Schaltzustand;
- die erfasste Beladung oder das Gesamtgewicht des Kraftfahrzeugs liegt oberhalb einer vorbestimmten Beladung oder eines Gesamtgewichts;
- die aktuelle Neigung oder der aktuelle Kurvenverlauf der Fahrstrecke, auf der sich das Kraftfahrzeug gerade bewegt oder die Neigung oder der Kurvenverlauf eines vorbestimmten, zu befahrenden Fahrstreckenabschnitts, auf welchem sich das Fahrzeug bewegen wird, liegt oberhalb einer bestimmten Neigung oder eines Kurvenverlaufs.

10. Verfahren gemäß einem der Ansprüche 7 bis 9, **dadurch gekennzeichnet, dass** beim Schalten des hydrodynamischen Retarders (1) vom Bremsbetrieb in den Nicht-Bremsbetrieb und Vorliegen wenigstens einer der genannten Bedingungen die Trennkupplung (4) um eine erste Zeitspanne verzögert geöffnet wird, wohingegen die Trennkupplung (4) unmittelbar oder um eine zweite Zeitspanne zeitverzögert geöffnet wird, wenn nicht mindestens eine der genannten Bedingungen vorliegt, wobei die erste Zeitspanne größer ist als die zweite Zeitspanne.

11. Verfahren gemäß einem der Ansprüche 1 bis 10, **dadurch gekennzeichnet, dass** das Öffnen nur dann erfolgt, wenn mittels dem Bremsaktuator (5) oder der Steuervorrichtung keine Bremsleistung mittels einer dem Antriebsmotor (2) zugeordneten Motorbremse und/oder des hydrodynamischen Retarders (1) angefordert wird.

12. Verfahren gemäß einem der Ansprüche 1 bis 11, **dadurch gekennzeichnet, dass** das Schließen und/oder Öffnen der Trennkupplung (4) manuell auslösbar ist.

13. Hydrodynamischer Retarder (1) für einen Kraftfahrzeugantriebsstrang
13.1 mit einem über einen Antrieb (11) in Umlauf versetzbaren Rotor (6) und einen stationär gegen ein stehendes Bauteil abstützbaren Stator (7) oder bei Ausbildung als Gegenlaufretarder einen in Gegenrichtung zum Rotor (6) umlaufenden Gegenlaufstator, wobei
13.2 der Rotor (6) und der Stator (7) oder der Gegenlaufrotor beschaufelte Räder umfassen, die miteinander einen mit Arbeitsmedium befüllbaren Arbeitsraum (8) ausbilden; und
13.3 der Antrieb (11) mit einer Trennkupplung (4) versehen ist, mittels welcher der Rotor (6) zu dessen Stilllegung vom Antrieb (11) abkoppelbar oder bei Ausbildung als Gegenlaufretarder der Gegenlaufrotor vom Antrieb (11) abkoppelbar oder der Stator (6) von dem stehenden Bauteil trennbar ist, sodass der Stator (6) oder bei Ausbildung als Gegenlaufretarder der Gegenlaufrotor freigebbar ist und dieser in Umfangsrichtung des hydrodynamischen Retarders (1) mit dem Arbeitsmedium umläuft;
13.4 mit einer Steuervorrichtung (9), welche das Öffnen und Schließen der Trennkupplung (4) zum Schalten des hydrodynamischen Retarders (1) zwischen einem Bremsbetrieb und einem Nicht-Bremsbetrieb steuert;
13.5 mit wenigstens einem oder einer Vielzahl von Sensoren (10) zur Erfassung von aktuellen Betriebsgrößen des Kraftfahrzeugantriebsstrangs, des Kraftfahrzeugs und/oder zur Erfassung von Umgebungsparametern; **dadurch gekennzeichnet, dass**
13.6 die Steuervorrichtung (9) derart ausgeführt ist, dass sie ein Verfahren gemäß einem der Ansprüche 1 bis 12 ausführt, sodass beim Schalten des hydrodynamischen Retarders (1) vom Bremsbetrieb in den Nicht-Bremsbetrieb das Öffnen der Trennkupplung (4) mit variierender zeitlicher Verzögerung in Abhängigkeit wenigstens der einen Größe, welche über den wenigstens einen Sensor (10) erfasst oder aus wenigstens einer ihr zugeleiteten Eingangsgröße bestimmt wird, erfolgt.

## Claims

1. Method for controlling a hydrodynamic retarder (1) disposed in a drive train of a motor vehicle, wherein the motor vehicle comprises a drive engine (2), the power output of which can be regulated by means of a foot pedal (3), a lever or a different actuator, wherein a rotor (6) of the hydrodynamic retarder (1) can be switched by means of a clutch (4) into a drive connection to the drive engine (2) and/or the drive train of the motor vehicle and the hydrodynamic retarder (1) can be filled with a working medium in a braking mode in order to exert a braking force on the drive train of the motor vehicle and/or the drive engine (2) and is emptied completely or to a residual amount of working medium in a non-braking mode and essentially delivers no braking force, and the adjusted braking force can be controlled or regulated at least indirectly by means of a brake actuator (5) or a control device, **characterized by** the following steps:
when switching the hydrodynamic retarder (1) by means of the brake actuator (5) or the control device from the braking mode into the non-braking mode, the disengagement of the clutch (4) takes place with a time delay that varies depending on at least one of the following variables:
- the switching state of an engine brake associated with the drive engine (2), by means of which the braking force can be exerted on the drive train of the motor vehicle;
- the position of the foot pedal (3), of the lever or of a different actuator for regulating the power output of the drive engine (2);
- the gear position of a gearbox disposed in the drive train of the motor vehicle;
- the presence of a gear change command, with which a gear change in a manual gearbox of the motor vehicle is demanded;
- the gradient of the revolution rate or of the torque of the drive engine (2), of a drive shaft of the gearbox or of drive wheels of the motor vehicle;
- the current speed or acceleration of the motor vehicle.

2. Method for controlling a hydrodynamic retarder (1) disposed in a drive train of a motor vehicle and comprising a revolving rotor (6) and a stator (7) or a revolving rotor (6) and a counter-rotating rotor revolving in the opposite direction thereto, which together form a working chamber (8) for adjusting a braking force that is filled with working medium in a braking mode and emptied of working medium in a non-braking mode, wherein the counter-rotating rotor is driven in the braking mode by means of the drive train with an engaged clutch (4) or the stator (7) is held stationary against a static component in the braking mode with an engaged clutch (4), and during the transition from the braking mode to the non-braking mode the working chamber (8) is emptied and the clutch (4) is disengaged, whereby the stator (7) is released and, when implemented as a counter-rotating retarder, the counter-rotating rotor is released, so that the same rotates in the circumferential direction of the hydrodynamic retarder (1) with the working medium, and the adjusted braking force can be controlled or regulated at least indirectly by means of a brake actuator (5) or a control device, wherein the motor vehicle comprises a drive engine (2), the power output of which can be regulated by means of a foot pedal (3), a lever or a different actuator,
**characterized by** the following steps:
when switching the hydrodynamic retarder (1) from the braking mode into the non-braking mode by means of the brake actuator (5) or the control device, disengaging the clutch (4) takes place with a varying time delay depending on at least one of the following variables:
- the switching state of an engine brake associated with the drive engine (2), by means of which a braking force can be exerted on the drive train of the motor vehicle;
- the position of the foot pedal (3), of the lever or of a different actuator for regulating the power output of the drive engine (2);
- the gear position of a gearbox disposed in the drive train of the motor vehicle;
- the presence of a gear change command, with which a gear change in a manual gearbox of the motor vehicle is demanded;
- the gradient of the revolution rate or of the torque of the drive engine (2), of a drive shaft of the gearbox or of drive wheels of the motor vehicle;
- the current speed or acceleration of the motor vehicle.

3. Method for controlling a hydrodynamic retarder (1) disposed in a drive train of a motor vehicle, wherein the motor vehicle comprises a drive engine (2), the power output of which can be regulated by means of a foot pedal (3), a lever or a different actuator, wherein a rotor (6) of the hydrodynamic retarder (1) can be switched by means of a clutch (4) into a drive connection with the drive engine (2) and/or the drive train of the motor vehicle and the hydrodynamic retarder (1) can be filled with a working medium in a braking mode in order to exert a braking force on the drive train of the motor vehicle and/or the drive engine (2) and is completely emptied of working medium in a non-braking mode, or is emptied to a residual amount, and essentially provides no braking force, and the adjusted braking force can be controlled or regulated at least indirectly by means of a brake actuator (5) or a control device,
**characterized by** the following steps:
when switching the hydrodynamic retarder (1) from the braking mode into the non-braking mode by means of the brake actuator (5) or the control device, the disengagement of the clutch (4) takes place with a varying time delay depending on at least one of the following variables:
- a driver profile of a driver demanding the braking force of the hydrodynamic retarder (1) by means of the brake actuator (5) or the control device;
- the gradient of the operation of the brake actuator (5) or the control device;
- the gradient of a target value for a control pressure for adjusting a degree of filling of the hydrodynamic retarder (1) or the number of changes of the target value over a predetermined period of time;
- the number and/or type of the demands for braking force of the hydrodynamic retarder (1) in a previous period of time;
- the switching work incurred when engaging the clutch (4) within a previous period of time.

4. Method for controlling a hydrodynamic retarder (1) disposed in a drive train of a motor vehicle and comprising a revolving rotor (6) and a stator (7) or a revolving rotor (6) and a counter-rotating rotor revolving in the opposite direction thereto, which together form a working chamber (8) for adjusting a braking force that is filled with working medium in a braking mode and is emptied of working medium in a non-braking mode, wherein the counter-rotating rotor is driven by means of the drive train with an engaged clutch (4) in the braking mode or the stator (7) is held stationary against a static component with an engaged clutch (4) in the braking mode and during the transition from the braking mode to the non-braking mode the working chamber (8) is emptied and the clutch (4) is disengaged, whereby the stator (7) is released and, when implemented as a counter-rotating retarder, the counter-rotating rotor is released, so that the same revolves in the circumferential direction of the hydrodynamic retarder (1) with the working medium, and the adjusted braking force can be controlled or regulated at least indirectly by means of a brake actuator (5) or a control device, wherein the motor vehicle comprises a drive engine (2), the power output of which can be regulated by means of a foot pedal (3), a lever or a different actuator,
**characterized by** the following steps:
when switching the hydrodynamic retarder (1) from the braking mode into the non-braking mode by means of the brake actuator (5) or the control device, the disengagement of the clutch (4) takes place with a varying time delay depending on at least one of the following variables:
- a driver profile of a driver demanding a braking force of the hydrodynamic retarder (1) by means of the brake actuator (5) or the control device;
- the gradient of the operation of the brake actuator (5) or the control device;
- the gradient of a target value for a control pressure for adjusting a degree of filling of the hydrodynamic retarder (1) or the number of changes of the target value over a predetermined period of time;
- the number and/or type of demands for a braking force of the hydrodynamic retarder (1) in a previous period of time;
- the shift work incurred when engaging the clutch (4) within a previous period of time.

5. Method for controlling a hydrodynamic retarder (1) disposed in a drive train of a motor vehicle, wherein the motor vehicle comprises a drive engine (2), the power output of which can be regulated by means of a foot pedal (3), a lever or a different actuator, wherein a rotor (6) of the hydrodynamic retarder (1) can be switched by means of a clutch (4) into a drive connection with the drive engine (2) and/or the drive train of the motor vehicle and the hydrodynamic retarder (1) can be filled with a working medium in a braking mode in order to exert a braking force on the drive train of the motor vehicle and/or the drive engine (2) and is emptied in a non-braking mode either completely or to a residual amount of working medium and exerts essentially no braking force, and the adjusted braking force can be controlled or regulated at least indirectly by means of a brake actuator (5) or a control device, **characterized by** the following steps:
when switching the hydrodynamic retarder (1) from the braking mode into the non-braking mode by means of the brake actuator (5) or the control device, the disengagement of the clutch (4) takes place with a varying time delay depending on at least one of the following variables:
- the switching state of an assembly disposed in the drive train of the motor vehicle,
- the switching state of a speed control system and/or a distance control system of the motor vehicle;
- the state of charge or switching state of an energy storage means for driving an auxiliary drive motor disposed in the drive train of the motor vehicle for supplying drive power into the drive train of the motor vehicle or for driving assemblies;
- the detected road quality;
- the loading or the total weight of the motor vehicle;
- the slope or the curve of the route on which the motor vehicle is currently moving or the slope or the curve of a predetermined segment of the route to be traversed on which the vehicle will be moving;
- an information signal from a driver assistance system, a vehicle-to-vehicle communications link or a traffic flow detection system.

6. Method for controlling a hydrodynamic retarder (1) disposed in a drive train of a motor vehicle and comprising a revolving rotor (6) and a stator (7) or a revolving rotor (6) and a counter-rotating rotor revolving in the opposite direction thereto, which together form a working chamber (8) for adjusting a braking force that is filled with a working medium in a braking mode and that is emptied of working medium in a non-braking mode, wherein the counter-rotating rotor is driven in the braking mode by means of the drive train with an engaged clutch (4) or the stator (7) is held stationary against a static component in the braking mode with an engaged clutch (4), and the working chamber (8) is emptied and the clutch (4) is disengaged during the transition from the braking mode to the non-braking mode, whereby the stator (7) is released and, when implemented as a counter-rotating retarder, the counter-rotating rotor is released, so that the same revolves in the circumferential direction of the hydrodynamic retarder (1) with the working medium, and the adjusted braking force can be controlled or regulated at least indirectly by means of a brake actuator (5) or a control device, wherein the motor vehicle comprises a drive engine (2), the power output of which can be regulated by means of a foot pedal (3), a lever or a different actuator, **characterized by** the following steps:
when switching the hydrodynamic retarder (1) from the braking mode into the non-braking mode by means of the brake actuator (5) or the control device, the disengagement of the clutch (4) takes place with a varying time delay depending on at least one of the following variables:
- the switching state of an assembly disposed in the drive train of the motor vehicle,
- the switching state of a speed control system and/or a distance control system of the motor vehicle;
- the state of charge or switching state of an energy storage means for driving an auxiliary drive motor disposed in the drive train of the motor vehicle for supplying drive power into the drive train of the motor vehicle or for driving assemblies;
- the detected road quality;
- the loading or the total weight of the motor vehicle;
- the slope or the curve of the route on which the motor vehicle is currently moving or the slope or the curve of a predetermined segment of the route to be traversed on which the vehicle will be moving;
- an information signal from a driver assistance system, a vehicle-to-vehicle communications link or a traffic flow detection device.

7. Method according to any one of Claims 1 and 2, **characterized in that** when switching the hydrodynamic retarder (1) from the braking mode into the non-braking mode the disengagement of the clutch (4) takes place with a varying time delay depending on at least one of the following conditions:
- the current position of the foot pedal (3), of the lever or of a different actuator for regulating the power output of the drive engine (2) is below a predetermined position;
- a gear below a predetermined gear of the gearbox is selected or is currently being selected;
- the current gradient of the revolution rate or of the torque of the drive engine (2) is greater than a predetermined gradient of the revolution rate or of the torque;
- a gear shift command exists or a gear shift command for down shifting to a lower gear exists;
- the current speed or acceleration of the motor vehicle is less than a predetermined speed or acceleration of the motor vehicle.

8. Method according to any one of Claims 3 and 4, **characterized in that** when switching the hydrodynamic retarder (1) from the braking mode into the non-braking mode the disengagement of the clutch (4) takes place with a varying time delay depending on at least one of the following conditions:
- a detected driver profile of a driver demanding a braking force of the hydrodynamic retarder (1) by means of the brake actuator (5) or the control device corresponds to a predetermined driver profile;
- the current gradient of the operation of the brake actuator (5) or the control device is greater than a predetermined gradient of the operation;
- the current gradient of a target value for a control pressure for adjusting a fill level of the hydrodynamic retarder (1) or the number of changes of the target value over the predetermined period of time is greater than a predetermined gradient of a target value for the control pressure or greater than a predetermined number of changes;
- the number and/or type of the demands for a braking force with the hydrodynamic retarder (1) in a previous period of time corresponds to a predetermined type of demand and/or is greater than a predetermined number;
- the sum of the shift work incurred when engaging the clutch (4) within a previous period of time is greater than a predetermined sum.

9. Method according to any one of Claims 5 and 6, **characterized in that** when switching the hydrodynamic retarder (1) from the braking mode into the non-braking mode the disengagement of the clutch (4) takes place with a varying time delay depending on at least one of the following conditions:
- the current state of charge or switching state of an energy storage means for driving an auxiliary drive motor disposed in the drive train of the motor vehicle for supplying drive power into the drive train of the motor vehicle or for driving assemblies is less than a predetermined state of charge or corresponds to a predetermined switching state;
- the detected loading or the total weight of the motor vehicle is greater than a predetermined loading or total weight;
- the current slope or the current curve of the route on which the motor vehicle is currently moving or the slope or the curve of a predetermined segment of the route on which the vehicle will be moving is greater than a defined slope or curve.

10. Method according to any one of Claims 7 to 9, **characterized in that** when switching the hydrodynamic retarder (1) from the braking mode into the non-braking mode and if at least one of said conditions exists, the clutch (4) is disengaged with a delay of a first period of time, whereas the clutch (4) is disengaged immediately or with a delay of a second period of time if none of said conditions exists, wherein the first period of time is longer than the second period of time.

11. Method according to any one of Claims 1 to 10, **characterized in that** the disengagement only takes place if no braking force by means of an engine brake associated with the drive engine (2) and/or by means of the hydrodynamic retarder (1) is demanded by means of the brake actuator (5) or the control device.

12. Method according to any one of Claims 1 to 11, **characterized in that** the engagement and/or disengagement of the clutch (4) can be triggered manually.

13. Hydrodynamic retarder (1) for a drive train of a motor vehicle
13.1 with a rotor (6) that can be set in rotation by means of a drive (11) and a stator (7) that can be held stationary against a static component or, when implemented as a counter-rotating retarder, a counter-rotating stator revolving in the opposite direction to the rotor (6), wherein
13.2 the rotor (6) and the stator (7) or the counter-rotating rotor comprise bladed wheels, which together form a working chamber (8) that can be filled with a working medium; and
13.3 the drive (11) is provided with a clutch (4), by means of which the rotor (6) can be decoupled from the drive (11) so as to become stationary or, when forming a counter-rotating retarder, the counter-rotating rotor can be decoupled from the drive (11) or the stator (6) can be isolated from the static component, so that the stator (6) or, when forming a counter-rotating retarder, the counter-rotating rotor can be released and the same revolves in the circumferential direction of the hydrodynamic retarder (1) with the working medium;
13.4 with a control device (9) that controls the disengagement and engagement of the clutch (4) for switching the hydrodynamic retarder (1) between a braking mode and a non-braking mode;
13.5 with at least one or a plurality of sensors (10) for detecting current operating variables of the drive train of the motor vehicle, of the motor vehicle and/or for detecting ambient parameters; **characterized in that**
13.6 the control device (9) is implemented such that it implements a method according to any one of Claims 1 to 12, so that when switching the hydrodynamic retarder (1) from the braking mode into the non-braking mode the disengagement of the clutch (4) takes place with a varying time delay depending on at least one of the variables detected by means of the at least one sensor (10) or determined from at least one of the input variables that is passed thereto.

## Revendications

1. Procédé de commande d'un ralentisseur hydrodynamique (1) disposé dans une chaîne cinématique d'un véhicule automobile, dans lequel le véhicule automobile comprend un moteur d'entraînement (2), dont la production de puissance est réglable au moyen d'une pédale (3), d'un levier ou d'un autre actionneur, dans lequel un rotor (6) du ralentisseur hydrodynamique (1) peut être commuté au moyen d'un embrayage de séparation (4) dans une liaison d'entraînement avec le moteur d'entraînement (2) et/ou avec la chaîne cinématique du véhicule automobile et le ralentisseur hydrodynamique (1) peut être rempli lors d'un fonctionnement de freinage avec un fluide de travail, afin d'exercer une puissance de freinage sur la chaîne cinématique du véhicule automobile et/ou sur le moteur d'entraînement (2) et est vidé du fluide de travail, entièrement ou jusqu'à une quantité résiduelle, dans un fonctionnement de non-freinage et ne fournit essentiellement aucune puissance de freinage, et la puissance de freinage établie peut être commandée ou réglée au moins indirectement au moyen d'un actionneur de frein (5) ou d'un dispositif de commande, **caractérisé par** les étapes suivantes:
lors de la commutation du ralentisseur hydrodynamique (1) du fonctionnement de freinage, au moyen de l'actionneur de frein (5) ou du dispositif de commande, au fonctionnement de non-freinage, il se produit l'ouverture de l'embrayage de séparation (4) avec un retard temporel variable en fonction d'au moins une des grandeurs suivantes:
- l'état de commutation d'un frein moteur associé au moteur d'entraînement (2), au moyen duquel une puissance de freinage peut être exercée sur la chaîne cinématique du véhicule automobile;
- la position de la pédale (3), du levier ou d'un autre actionneur pour la régulation de la production de puissance du moteur d'entraînement (2);
- la vitesse enclenchée d'une boîte de vitesses disposée dans la chaîne cinématique du véhicule automobile;
- la présence d'un ordre de changement de vitesse, avec lequel un changement de vitesse est demandé dans une boîte de vitesses du véhicule automobile;
- le gradient de la vitesse de rotation ou du couple de rotation du moteur d'entraînement (2), d'un arbre de sortie de la boîte de vitesses ou de roues motrices du véhicule automobile;
- la vitesse ou l'accélération actuelle du véhicule automobile.

2. Procédé de commande d'un ralentisseur hydrodynamique (1) disposé dans une chaîne cinématique d'un véhicule automobile, qui présente un rotor tournant (6) et un stator (7) ou un rotor tournant (6) et un rotor contraire tournant en sens contraire de celui-ci, qui forment ensemble, pour l'établissement de la puissance de freinage, une chambre de travail (8) remplie de fluide de travail dans un fonctionnement de freinage et vidée du fluide de travail dans un fonctionnement de non-freinage, dans lequel le rotor contraire est entraîné en fonctionnement de freinage par la chaîne cinématique avec un embrayage de séparation fermé (4) ou le stator (7) est supporté dans le fonctionnement de freinage avec un embrayage de séparation fermé (4) de façon stationnaire contre un composant fixe et, lors du passage du fonctionnement de freinage au fonctionnement de non-freinage, la chambre de travail (8) est vidée et l'embrayage de séparation (4) est ouvert, ce qui libère le stator (7) et ce qui libère le rotor contraire lorsqu'il est réalisé sous forme de ralentisseur contraire, de telle manière que celui-ci tourne dans la direction périphérique du ralentisseur hydrodynamique (1) avec le fluide de travail, et que la puissance de freinage établie puisse être commandée ou réglée au moins indirectement au moyen d'un actionneur de frein (5) ou d'un dispositif de commande, dans lequel le véhicule automobile comprend un moteur d'entraînement (2), dont la production de puissance est réglable au moyen d'une pédale (3), d'un levier ou d'un autre actionneur, **caractérisé par** les étapes suivantes:
lors de la commutation du ralentisseur hydrodynamique (1) du fonctionnement de freinage, au moyen de l'actionneur de frein (5) ou du dispositif de commande, au fonctionnement de non-freinage, il se produit l'ouverture de l'embrayage de séparation (4) avec un retard temporel variable en fonction d'au moins une des grandeurs suivantes:
- l'état de commutation d'un frein moteur associé au moteur d'entraînement (2), au moyen duquel une puissance de freinage peut être exercée sur la chaîne cinématique du véhicule automobile;
- la position de la pédale (3), du levier ou d'un autre actionneur pour la régulation de la production de puissance du moteur d'entraînement (2);
- la vitesse enclenchée d'une boîte de vitesses disposée dans la chaîne cinématique du véhicule automobile;
- la présence d'un ordre de changement de vitesse, avec lequel un changement de vitesse est demandé dans une boîte de vitesses du véhicule automobile;
- le gradient de la vitesse de rotation ou du couple de rotation du moteur d'entraînement (2), d'un arbre de sortie de la boîte de vitesses ou de roues motrices du véhicule automobile;
- la vitesse ou l'accélération actuelle du véhicule automobile.

3. Procédé de commande d'un ralentisseur hydrodynamique (1) disposé dans une chaîne cinématique d'un véhicule automobile, dans lequel le véhicule automobile comprend un moteur d'entraînement (2), dont la production de puissance est réglable au moyen d'une pédale (3), d'un levier ou d'un autre actionneur, dans lequel un rotor (6) du ralentisseur hydrodynamique (1) peut être commuté au moyen d'un embrayage de séparation (4) dans une liaison d'entraînement avec le moteur d'entraînement (2) et/ou avec la chaîne cinématique du véhicule automobile et le ralentisseur hydrodynamique (1) peut être rempli lors d'un fonctionnement de freinage avec un fluide de travail, afin d'exercer une puissance de freinage sur la chaîne cinématique du véhicule automobile et/ou sur le moteur d'entraînement (2) et est vidé du fluide de travail, entièrement ou jusqu'à une quantité résiduelle, dans un fonctionnement de non-freinage et ne fournit essentiellement aucune puissance de freinage, et la puissance de freinage établie peut être commandée ou réglée au moins indirectement au moyen d'un actionneur de frein (5) ou d'un dispositif de commande, **caractérisé par** les étapes suivantes:
lors de la commutation du ralentisseur hydrodynamique (1) du fonctionnement de freinage, au moyen de l'actionneur de frein (5) ou du dispositif de commande, au fonctionnement de non-freinage, il se produit l'ouverture de l'embrayage de séparation (4) avec un retard temporel variable en fonction d'au moins une des grandeurs suivantes:
- un profil de conducteur, d'un conducteur qui demande une puissance de freinage du ralentisseur hydrodynamique (1) au moyen de l'actionneur de frein (5) ou du dispositif de commande;
- le gradient de l'actionnement de l'actionneur de frein (5) ou du dispositif de commande;
- le gradient d'une valeur de consigne pour une pression de commande en vue de l'établissement d'un degré de remplissage du ralentisseur hydrodynamique (1) ou le nombre de changements de la valeur de consigne sur une période de temps prédéterminée;
- le nombre et/ou la nature de la demande de puissance de freinage du ralentisseur hydrodynamique (1) dans une période de temps précédente;
- le travail de commutation produit lors de la fermeture de l'embrayage de séparation (4) à l'intérieur d'une période de temps précédente.

4. Procédé de commande d'un ralentisseur hydrodynamique (1) disposé dans une chaîne cinématique d'un véhicule automobile, qui présente un rotor tournant (6) et un stator (7) ou un rotor tournant (6) et un rotor contraire tournant en sens contraire de celui-ci, qui forment ensemble, pour l'établissement de la puissance de freinage, une chambre de travail (8) remplie de fluide de travail dans un fonctionnement de freinage et vidée du fluide de travail dans un fonctionnement de non-freinage, dans lequel le rotor contraire est entraîné en fonctionnement de freinage par la chaîne cinématique avec un embrayage de séparation fermé (4) ou le stator (7) est supporté dans le fonctionnement de freinage avec un embrayage de séparation fermé (4) de façon stationnaire contre un composant fixe et, lors du passage du fonctionnement de freinage au fonctionnement de non-freinage, la chambre de travail (8) est vidée et l'embrayage de séparation (4) est ouvert, ce qui libère le stator (7) et ce qui libère le rotor contraire lorsqu'il est réalisé sous forme de ralentisseur contraire, de telle manière que celui-ci tourne dans la direction périphérique du ralentisseur hydrodynamique (1) avec le fluide de travail, et que la puissance de freinage établie puisse être commandée ou réglée au moins indirectement au moyen d'un actionneur de frein (5) ou d'un dispositif de commande, dans lequel le véhicule automobile comprend un moteur d'entraînement (2), dont la production de puissance est réglable au moyen d'une pédale (3), d'un levier ou d'un autre actionneur, **caractérisé par** les étapes suivantes:
lors de la commutation du ralentisseur hydrodynamique (1) du fonctionnement de freinage, au moyen de l'actionneur de frein (5) ou du dispositif de commande, au fonctionnement de non-freinage, il se produit l'ouverture de l'embrayage de séparation (4) avec un retard temporel variable en fonction d'au moins une des grandeurs suivantes:
- un profil de conducteur, d'un conducteur qui demande une puissance de freinage du ralentisseur hydrodynamique (1) au moyen de l'actionneur de frein (5) ou du dispositif de commande;
- le gradient de l'actionnement de l'actionneur de frein (5) ou du dispositif de commande;
- le gradient d'une valeur de consigne pour une pression de commande en vue de l'établissement d'un degré de remplissage du ralentisseur hydrodynamique (1) ou le nombre de changements de la valeur de consigne sur une période de temps prédéterminée;
- le nombre et/ou la nature de la demande de puissance de freinage du ralentisseur hydrodynamique (1) dans une période de temps précédente;
- le travail de commutation produit lors de la fermeture de l'embrayage de séparation (4) à l'intérieur d'une période de temps précédente.

5. Procédé de commande d'un ralentisseur hydrodynamique (1) disposé dans une chaîne cinématique d'un véhicule automobile, dans lequel le véhicule automobile comprend un moteur d'entraînement (2), dont la production de puissance est réglable au moyen d'une pédale (3), d'un levier ou d'un autre actionneur, dans lequel un rotor (6) du ralentisseur hydrodynamique (1) peut être commuté au moyen d'un embrayage de séparation (4) dans une liaison d'entraînement avec le moteur d'entraînement (2) et/ou avec la chaîne cinématique du véhicule automobile et le ralentisseur hydrodynamique (1) peut être rempli lors d'un fonctionnement de freinage avec un fluide de travail, afin d'exercer une puissance de freinage sur la chaîne cinématique du véhicule automobile et/ou sur le moteur d'entraînement (2) et est vidé du fluide de travail, entièrement ou jusqu'à une quantité résiduelle, dans un fonctionnement de non-freinage et ne fournit essentiellement aucune puissance de freinage, et la puissance de freinage établie peut être commandée ou réglée au moins indirectement au moyen d'un actionneur de frein (5) ou d'un dispositif de commande, **caractérisé par** les étapes suivantes:
lors de la commutation du ralentisseur hydrodynamique (1) du fonctionnement de freinage, au moyen de l'actionneur de frein (5) ou du dispositif de commande, au fonctionnement de non-freinage, il se produit l'ouverture de l'embrayage de séparation (4) avec un retard temporel variable en fonction d'au moins une des grandeurs suivantes:
- l'état de commutation d'un ensemble disposé dans la chaîne cinématique du véhicule automobile,
- l'état de commutation d'un système de régulation de vitesse et/ou d'un système de régulation de distance du véhicule automobile;
- l'état de charge ou l'état de commutation d'un accumulateur d'énergie pour l'entraînement d'un moteur d'entraînement supplémentaire disposé dans la chaîne cinématique du véhicule automobile pour fournir de la puissance d'entraînement dans la chaîne cinématique du véhicule automobile ou pour entraîner des ensembles;
- l'état détecté de la chaussée;
- la charge ou le poids total du véhicule automobile;
- l'inclinaison ou la courbure de la route, sur laquelle le véhicule automobile se déplace à cet instant ou l'inclinaison ou la courbure d'un tronçon de route prédéterminé à parcourir, sur lequel le véhicule va circuler;
- un signal d'information émanant d'un système d'assistance au conducteur, d'une liaison de communication de véhicule à véhicule ou d'un dispositif de reconnaissance du flux de trafic.

6. Procédé de commande d'un ralentisseur hydrodynamique (1) disposé dans une chaîne cinématique d'un véhicule automobile, qui présente un rotor tournant (6) et un stator (7) ou un rotor tournant (6) et un rotor contraire tournant en sens contraire de celui-ci, qui forment ensemble, pour l'établissement de la puissance de freinage, une chambre de travail (8) remplie de fluide de travail dans un fonctionnement de freinage et vidée du fluide de travail dans un fonctionnement de non-freinage, dans lequel le rotor contraire est entraîné en fonctionnement de freinage par la chaîne cinématique avec un embrayage de séparation fermé (4) ou le stator (7) est supporté dans le fonctionnement de freinage avec un embrayage de séparation fermé (4) de façon stationnaire contre un composant fixe et, lors du passage du fonctionnement de freinage au fonctionnement de non-freinage, la chambre de travail (8) est vidée et l'embrayage de séparation (4) est ouvert, ce qui libère le stator (7) et ce qui libère le rotor contraire lorsqu'il est réalisé sous forme de ralentisseur contraire, de telle manière que celui-ci tourne dans la direction périphérique du ralentisseur hydrodynamique (1) avec le fluide de travail, et que la puissance de freinage établie puisse être commandée ou réglée au moins indirectement au moyen d'un actionneur de frein (5) ou d'un dispositif de commande, dans lequel le véhicule automobile comprend un moteur d'entraînement (2), dont la production de puissance est réglable au moyen d'une pédale (3), d'un levier ou d'un autre actionneur, **caractérisé par** les étapes suivantes:
lors de la commutation du ralentisseur hydrodynamique (1) du fonctionnement de freinage, au moyen de l'actionneur de frein (5) ou du dispositif de commande, au fonctionnement de non-freinage, il se produit l'ouverture de l'embrayage de séparation (4) avec un retard temporel variable en fonction d'au moins une des grandeurs suivantes:
- l'état de commutation d'un ensemble disposé dans la chaîne cinématique du véhicule automobile,
- l'état de commutation d'un système de régulation de vitesse et/ou d'un système de régulation de distance du véhicule automobile;
- l'état de charge ou l'état de commutation d'un accumulateur d'énergie pour l'entraînement d'un moteur d'entraînement supplémentaire disposé dans la chaîne cinématique du véhicule automobile pour fournir de la puissance d'entraînement dans la chaîne cinématique du véhicule automobile ou pour entraîner des ensembles;
- l'état détecté de la chaussée;
- la charge ou le poids total du véhicule automobile;
- l'inclinaison ou la courbure de la route, sur laquelle le véhicule automobile se déplace à cet instant ou l'inclinaison ou la courbure d'un tronçon de route prédéterminé à parcourir, sur lequel le véhicule va circuler;
- un signal d'information émanant d'un système d'assistance au conducteur, d'une liaison de communication de véhicule à véhicule ou d'un dispositif de reconnaissance du flux de trafic.

7. Procédé selon la revendication 1 ou 2, **caractérisé en ce que**, lors de la commutation du ralentisseur hydrodynamique (1) du fonctionnement de freinage au fonctionnement de non-freinage, il se produit l'ouverture de l'embrayage de séparation (4) avec un retard temporel variable en fonction d'au moins une des conditions suivantes:
- la position actuelle de la pédale (3), du levier ou d'un autre actionneur pour la régulation de la production de puissance du moteur d'entraînement (2) est située en dessous d'une position prédéterminée;
- une vitesse inférieure à une vitesse prédéterminée de la boîte de vitesses est actuellement ou a été enclenchée;
- le gradient actuel de la vitesse de rotation ou du couple de rotation du moteur d'entraînement (2) est supérieur à un gradient prédéterminé de la vitesse de rotation ou du couple de rotation;
- il existe un ordre de changement de vitesse ou il existe un ordre de changement de vitesse pour rétrograder à une vitesse inférieure;
- la vitesse ou l'accélération actuelle du véhicule automobile est inférieure à une vitesse ou à une accélération prédéterminée du véhicule automobile.

8. Procédé selon la revendication 3 ou 4, **caractérisé en ce que**, lors de la commutation du ralentisseur hydrodynamique (1) du fonctionnement de freinage au fonctionnement de non-freinage, il se produit l'ouverture de l'embrayage de séparation (4) avec un retard temporel variable en fonction d'au moins une des conditions suivantes:
- un profil de conducteur détecté, d'un conducteur qui demande de la puissance de freinage du ralentisseur hydrodynamique (1) au moyen d'un actionneur de frein (5) ou du dispositif de commande, correspond à un profil de conducteur prédéterminé;
- le gradient actuel de l'actionnement de l'actionneur de frein (5) ou du dispositif de commande est supérieur à un gradient prédéterminé de l'actionnement;
- le gradient actuel d'une valeur de consigne pour une pression de commande en vue de l'établissement d'un degré de remplissage du ralentisseur hydrodynamique (1) ou le nombre de changements de la valeur de consigne sur la période de temps prédéterminée est supérieur à un gradient prédéterminé d'une valeur de consigne pour la pression de commande ou est supérieur à un nombre de changements prédéterminé;
- le nombre et/ou la nature de la demande de puissance de freinage avec le ralentisseur hydrodynamique (1) dans une période de temps précédente correspond à une nature prédéterminée et/ou est supérieur à un nombre prédéterminé;
- la somme du travail de commutation produit lors de la fermeture de l'embrayage de séparation (4) à l'intérieur d'une période de temps précédente est supérieure à une somme prédéterminée.

9. Procédé selon la revendication 5 ou 6, **caractérisé en ce que**, lors de la commutation du ralentisseur hydrodynamique (1) du fonctionnement de freinage au fonctionnement de non-freinage, il se produit l'ouverture de l'embrayage de séparation (4) avec un retard temporel variable en fonction d'au moins une des conditions suivantes:
- l'état de charge actuel ou l'état de commutation actuel d'un accumulateur d'énergie pour l'entraînement d'un moteur d'entraînement supplémentaire disposé dans la chaîne cinématique du véhicule automobile pour fournir de la puissance d'entraînement dans la chaîne cinématique du véhicule automobile ou pour entraîner des ensembles est inférieur à un état de charge prédéterminé ou correspond à un état de commutation prédéterminé;
- la charge détectée ou le poids total détecté du véhicule automobile est supérieur(e) à une charge prédéterminée ou à un poids total prédéterminé;
- l'inclinaison actuelle ou la courbure actuelle de la route, sur laquelle le véhicule automobile se déplace à cet instant ou l'inclinaison ou la courbure d'un tronçon de route prédéterminé à parcourir, sur lequel le véhicule va circuler, est supérieure à une inclinaison ou à une courbure prédéterminée.

10. Procédé selon l'une quelconque des revendications 7 à 9, **caractérisé en ce que**, lors de la commutation du ralentisseur hydrodynamique (1) du fonctionnement de freinage au fonctionnement de non-freinage et en présence d'au moins une des conditions précitées, l'embrayage de séparation (4) s'ouvre avec un retard d'une première période de temps, et au contraire l'embrayage de séparation (4) s'ouvre immédiatement ou avec un retard d'une deuxième période de temps, lorsqu'au moins une des conditions précitées n'est pas présente, la première période de temps étant plus grande que la deuxième période de temps.

11. Procédé selon l'une quelconque des revendications 1 à 10, **caractérisé en ce que** l'ouverture ne se produit que lorsqu'aucune puissance de freinage au moyen d'un frein moteur associé au moteur d'entraînement (2) et/ou du ralentisseur hydrodynamique (1) n'est demandée au moyen de l'actionneur de frein (5) ou du dispositif de commande.

12. Procédé selon l'une quelconque des revendications 1 à 11, **caractérisé en ce que** la fermeture et/ou l'ouverture de l'embrayage de séparation (4) peuvent être effectuées manuellement.

13. Ralentisseur hydrodynamique (1) pour une chaîne cinématique de véhicule automobile,
13.1 avec un rotor (6) pouvant être entraîné en rotation au moyen d'un entraînement (11) et un stator (7) pouvant s'appuyer de façon stationnaire contre un composant fixe ou un stator contraire tournant en sens contraire du rotor (6), lorsqu'il est configuré en ralentisseur contraire, dans lequel
13.2 le rotor (6) et le stator (7) ou le rotor contraire comprennent des roues à aubes, qui forment l'une avec l'autre une chambre de travail (8) pouvant être remplie de fluide de travail; et
13.3 l'entraînement (11) est muni d'un embrayage de séparation (4), au moyen duquel le rotor (6) peut être découplé de l'entraînement (11) pour sa mise à l'arrêt ou le rotor contraire peut être découplé de l'entraînement (11) lorsqu'il est configuré en ralentisseur contraire ou le stator (6) peut être séparé du composant fixe, de telle manière que le stator (6) ou, lorsqu'il est configuré en ralentisseur contraire, le rotor contraire puisse être libéré et que celui-ci tourne dans la direction périphérique du ralentisseur hydrodynamique (1) avec le fluide de travail;
13.4 avec un dispositif de commande (9), qui commande l'ouverture et la fermeture de l'embrayage de séparation (4) pour la commutation du ralentisseur hydrodynamique (1) entre un fonctionnement de freinage et un fonctionnement de non-freinage;
13.5 avec au moins un ou une multiplicité de capteurs (10) pour la détection de grandeurs de fonctionnement actuelles de la chaîne cinématique du véhicule automobile, du véhicule automobile et/ou pour la détection de paramètres ambiants;
**caractérisé en ce que**
13.6 le dispositif de commande (9) est réalisé d'une manière telle qu'il exécute un procédé selon l'une quelconque des revendications 1 à 12, de telle manière que, lors de la commutation du ralentisseur hydrodynamique (1) du fonctionnement de freinage au fonctionnement de non-freinage, l'ouverture de l'embrayage de séparation (4) soit effectuée avec un retard temporel variable en fonction d'au moins une grandeur, qui est détectée au moyen dudit au moins un capteur (10) ou déterminée à partir d'au moins une grandeur d'entrée qui lui est fournie.
